# FASCICULE DE BREVET EUROPEEN

(11) **EP 0 769 316 B1**
(45) Date de publication et mention de la délivrance du brevet: **15.01.2003**
(21) Numéro de dépôt: 96402222.2
(22) Date de dépôt: 18.10.1996
(51) Int. Cl.: B01D 15/02, B01J 8/04, B01D 53/04

(54) **Distributeur permettant l'injection et/ou le soutirage indépendant de fluides**
Verteiler zur unabhängigen Ein- und/oder Abführung von Fluiden
Distributor for independently injecting and/or collecting fluids

(30) Priorité: 20.10.1995 FR 9512969; 21.11.1995 FR 9513811; 21.11.1995 FR 9513812; 21.11.1995 FR 9513813
(43) Date de publication de la demande: 23.04.1997
(73) Titulaire: INSTITUT FRANCAIS DU PETROLE, 92500 Rueil Malmaison (FR)
(72) Inventeur: Callebert, Olivier, 92500 Rueil Malmaison (FR); Dessapt, Jean-Paul, 78650 Beynes (FR); Pucci, Annick, 78290 Croissy sur Seine (FR); Renard, Pierre, 78560 Saint Nom la Breteche (FR)

(56) Documents cités:
- EP-A- 0 074 815
- FR-A- 2 181 853
- US-A- 3 697 416
- US-A- 3 723 072
- US-A- 4 138 327

## Description

La présente invention concerne un dispositif, ou en abrégé DME, et un procédé permettant de distribuer, mélanger, additionner et/ou soutirer plusieurs fluides, au moins un fluide principal et au moins deux autres fluides secondaires.

Elle trouve notamment son application dans le domaine de la chromatographie pour des fluides se trouvant dans l'état gazeux, liquide ou encore supercritique.

Lorsque les procédés de séparation par distillation ne sont pas efficaces, il est possible et habituel de faire appel à des systèmes de lit mobile simulé, pour séparer les corps comportant par exemple plusieurs composés chimiques différents ou encore des corps comportant des isomères.

Ainsi, le dispositif selon la présente invention, dénommé ci-après en abrégé DME, est disposé, par exemple, de manière avantageuse dans une colonne comportant plusieurs lits de solides granulaires, entre deux de ces lits par exemple. Il a pour fonction notamment de distribuer ou de collecter sur la totalité de la section de la colonne tout fluide additionné ou soutiré. Il sert aussi à remélanger le fluide circulant dans les lits de solides granulaires lorsqu'aucun autre fluide secondaire est additionné ou soutiré. Avantageusement, il est possible de répartir plusieurs dispositifs DME selon la présente invention, à l'intérieur d'une même colonne.

Les procédés de chromatographie mettent en oeuvre généralement plusieurs fluides, appelés fluides secondaires pour les distinguer du fluide principal ou corps à séparer, circulant dans la colonne de chromatographie.

Ces fluides secondaires peuvent être de nature différentes et être soutirés de la colonne ou encore Injectés dans la colonne par exemple au niveau du DME.

Cette différence de nature des fluides conduit, par exemple, à des risques de pollution, un fluide pouvant se trouver en contact avec un autre fluide, nécessitant des opérations supplémentaires de rinçage lorsque l'on utilise un circuit d'injection et/ou de soutirage commun pour les différents fluides secondaires.

De plus, en cours de chromatographie, notamment en fin d'opération de soutirage d'un premier fluide, il subsiste un bouchon ou reliquat de ce fluide qu'il est nécessaire d'éliminer avant de procéder au soutirage et/ou à l'injection d'un second fluide.

Pour cela, une opération préliminaire consiste à pousser ou à soutirer ce reliquat de la colonne.

Les opérations de rinçages habituellement réalisées pour nettoyer et/ou purger les circuits contribuent à augmenter la complexité des étapes du procédé mis en oeuvre dans la colonne, son coût et peut diminuer son rendement.

De plus, dans certains procédés, il est très important d'obtenir une distribution ou une collecte des fluides circulant dans le lit aussi homogène que possible.

En particulier, dans le domaine de la chromatographie en lit mobile simulé, le plus souvent opéré en contre courant simulé, et qui associe dans la majorité des cas des colonnes ayant de larges diamètres ou sections, et de nombreux étages de séparation, il s'avère ainsi nécessaire de disposer d'un DME entre chaque étage de séparation pour assurer d'une part la collecte du fluide principal (A) de la manière la plus uniforme possible, et d'autre part la distribution et/ou le soutirage d'un ou plusieurs fluides secondaires, ainsi que la redistribution du mélange formé à l'intérieur du DME.

Il est donc très important de rendre la propagation du fluide principal dans la colonne aussi uniforme que possible en tenant un écoulement de type piston. Un des moyens pour y parvenir est de minimiser les différences de temps de parcours, entre les différentes lignes de flux du fluide en écoulement, ou entre les différentes particules de fluides, avant leur entrée dans la chambre de mélangé. En effet, ces lignes de flux vont avoir des longueurs de parcours et des temps de parcours différents en fonction de la position de leur chemin de circulation à l'intérieur de la colonne, ce chemin étant par exemple référencé par rapport à l'axe de la colonne, (ou encore par rapport à une de ses parois), et à la position de la chambre de mélange, plus particulièrement de l'ouverture de la chambre permettant le passage des fluides.

Par exemple, lorsque la chambre de mélange est disposée sensiblement au centre de la colonne et a une ouverture située au voisinage de l'axe central de cette colonne, le temps de parcours pour une ligne de fluide circulant à proximité de la paroi extérieure de l'enceinte est supérieur au temps de parcours d'une ligne de fluide circulant au voisinage du centre de la colonne.

Ces différences de temps de parcours induisent des décalages dans l'arrivée des lignes de flux ou des lignes de fluide dans la chambre de mélange qui peuvent entraîner des perturbations au niveau du front d'avancement du fluide principal. Cette non homogénéité dans les instants d'arrivée peut affecter la qualité du mélange réalisé dans cette chambre, et de plus perturber les différents courants de propagation des fluides principaux avançant ou se propageant sous forme de "piston".

Parmi les systèmes de distributeurs ou DME décrits dans des publications antérieures et utilisés au stade industriel pour la chimie fine, le laboratoire ou la grande industrie, la société AMICON propose un DME qui comprend un système de déflecteur-distributeur central permettant d'obtenir une distribution du fluide principal correcte avec de faibles volumes morts. Néanmoins, il ne comporte pas de moyens permettant d'ajouter et/ou de soutirer un fluide secondaire, ni de moyens permettant le mélange optimal d'un fluide principal et d'un fluide secondaire.

De plus, le système de déflecteur central entraîne quelques perturbations au niveau de la distribution radiale du fluide principal, et la perte de charge est relativement importante à cause de vitesses élevées au niveau de la collecte centrale relativement ponctuelle dans le distributeur.

On rappelle que les termes amont et aval sont à considérer par rapport au sens de circulation du fluide principal circulant dans les lits de solides granulaires et traversant le DME.

Le brevet US-A-3.948.775 décrit un DME utilisé dans une colonne chromatographique comportant deux lits dans lequel le fluide principal (A) est collecté en aval d'une grille située à la sortie du premier lit par une conduite et renvoyé en amont du second lit, et d'une grille de collecte par une conduite, avant d'être redistribué dans le second lit de manière latérale. Le fluide secondaire (B) peut être introduit par une conduite supplémentaire et mélangé en ligne avec le fluide principal, le mélange se faisant de façon relativement ponctuel. Les zones de collecte et de redistribution sont séparées par un baffle étanche incliné et permettent ainsi d'obtenir une collecte conique avec un faible volume mort.

Néanmoins, l'existence d'une ligne extérieure induit un volume mort supplémentaire pouvant engendrer un phénomène de rétromélange et des pertes de charge additionnelles.

De plus, la distribution latérale des fluides du fait de son absence de symétrie peut entraîner une homogénéisation imparfaite pour des colonnes ayant des larges diamètres.

L'enseignement contenu dans le brevet US-A-3.214.247, consiste à collecter en totalité le fluide principal en aval d'un baffle et à le canaliser ensuite dans un espace délimité par le baffle et des moyens d'injection d'un fluide secondaire. Le fluide principal canalisé est mélangé dans l'espace ainsi défini avec le fluide secondaire distribué sous forme de jets transversaux, et le mélange résultant est ensuite redistribué dans l'espace situé en dessous du baffle avant d'être envoyé dans le second lit. Du fait de la forme inclinée des parois du baffle, ce dispositif présente de faibles volumes morts et la perte de charge induite est relativement modérée du fait de la collecte transversale.

Néanmoins, l'espace de collecte du fluide principal, l'espace d'injection du fluide secondaire et l'espace de mélange ne sont pas délimités de manière précise, ce qui empêche de maîtriser en totalité la fonction de mélange. De plus, la zone de mélange n'étant pas confinée au niveau de la zone centrale, des phénomènes de rétromélange peuvent alors se produire dans toute la section conique de collecte et/ou de redistribution.

Le brevet US 3.723.072 décrit un appareil permettant de réaliser le mélange de deux fluides à l'intérieur d'une chambre de mélange avant de le redistribuer dans un lit secondaire. Ce dispositif prévoit un moyen de redistribution du mélange qui ne permet pas d'optimiser la redistribution dans le lit, ni d'éviter la perturbation induite du fait des différences de temps de propagation des lignes de fluide principal dans le lit supérieur vanent selon leur position par rapport à l'enceinte et au point d'entrée de la chambre.

Toutefois, aucun de ces dispositifs ne décrit ni ne suggère d'utiliser plusieurs circuits d'injection et/ou de soutirage "dédiés" à un fluide, c'est-à-dire utilisés pour le passage d'un fluide prédéterminé, permettant ainsi de pallier les inconvénients prémentionnés.

Le mot "dédié", tel qu'il est utilisé dans le contexte de l'invention, a pour signification qu'un circuit d'injection et/ou de soutirage voit uniquement le passage d'un fluide prédéterminé, lors de la mise en oeuvre du procédé.

La présente invention est une amélioration de la demande précédente du demandeur WO-95/03867, qui évoque la possibilité de disposer plusieurs circuits d'injection et/ou de soutirage de fluides secondaires positionnés au-dessus de la chambre de mélange. Un tel agencement est bien adapté lorsque le nombre de fluides secondaires dans la colonne est au plus égal à deux. Néanmoins, il convient moins bien pour l'utilisation de plus de deux fluides secondaires injectés et/ou soutirés de la colonne, du fait notamment de la complexité de distribution des conduits reliant les chambres d'injection et/ou de soutirage avec l'extérieur de la colonne.

Par ailleurs, lors d'une opération d'injection et/ou de soutirage, il est préférable que le fluide injecté et/ou soutiré arrive simultanément en tous points de la ou des chambres de mélange, ce qui n'est pas possible lorsqu'il existe dans un des conduits un bouchon ou reliquat d'un fluide de nature différente à celui injecté et/ou soutiré.

De plus, s'il s'avère particulièrement efficace pour réaliser le mélange d'un fluide principal et d'un fluide secondaire, un tel dispositif n'est pas optimisé pour minimiser les différences de parcours ou de temps de parcours des lignes du fluide principal dans le lit de solides granulaires situé en amont du DME, ainsi que celles des lignes du mélange issu du DME.

Il a été découvert, et c'est l'un des objets de la présente invention, que l'on peut remédier aux inconvénients précités en utilisant un DME équipé de circuits indépendants pour injecter et/ou soutirer plusieurs fluides secondaires par rapport à la chambre de mélange. Les circuits d'injection et/ou de soutirage des fluides secondaires sont agencés par exemple de manière à offrir plusieurs accès d'injection et/ou de soutirage pour des fluides secondaires.

Avantageusement, la forme des moyens de collecte et/ou de distribution du fluide principal ou d'un mélange de fluide provenant de la chambre de mélange est adaptée en tenant compte par exemple du point de départ ou point d'injection d'un fluide dans la colonne et de son point d'entrée dans la chambre de mélange, afin de diminuer les différences de longueur de parcours ou de temps de parcours des lignes de fluide principal circulant dans les lits. Par lignes de fluide, on entend aussi les particules du fluide circulant dans les lits de solides granulaires.

Ainsi, la présente invention concerne un dispositif ou DME permettant de distribuer, de mélanger, d'injecter et/ou de soutirer plusieurs fluides, un des fluides étant un fluide principal A₁, et au moins, un premier fluide secondaire B₁ et un second fluide secondaire B₂, le dispositif comportant des moyens de collecte du fluide principal A₁, les moyens de collecte étant en relation avec au moins une chambre de mélange, au moins un premier circuit d'injection et/ou de soutirage d'un premier fluide secondaire B₁, et au moins un second circuit d'injection et/ou de soutirage d'un second fluide secondaire B₂, les circuits d'injection et/ou de soutirage étant en communication avec la chambre de mélange à l'aide d'une ou plusieurs d'ouvertures permettant le passage des fluides secondaire B₁ et B₂ vers ou à partir de la chambre de mélange, la chambre de mélange comportant au moins un orifice d'introduction du fluide principal A₁, au moins un orifice de sortie du mélange formé par les différents fluides et des moyens de redistribution du mélange issu de la chambre de mélange, les moyens de redistribution étant disposés par exemple en aval ou après le DME.

Il est caractérisé en ce que les circuits d'injection et/ou de soutirage sont distincts et disposés à proximité de la chambre de mélange et séparés par une des parois de la chambre qui est plane et a une direction sensiblement parallèle à l'axe du DME.

Selon un mode de réalisation du DME selon l'invention les circuits distincts d'injection et/ou de soutirage sont, par exemple, disposés sur un même côté de la chambre de mélange.

Les circuits d'injection et/ou de soutirage sont par exemple disposés selon au moins une des parois externes de la chambre de mélange. Selon un mode préféré du dispositif selon l'invention, les circuits indépendants d'injection et/ou de soutirage sont disposés de part et d'autre de la chambre de mélange, par exemple selon deux parois latérales opposées.

Selon une variante de réalisation du DME, le nombre de circuits d'injection et/ou de soutirage est, par exemple, au moins supérieur à quatre.

Un circuit d'injection et/ou de soutirage est, par exemple, associé à au moins un pré-circuit d'injection et/ou de soutirage.

Selon un mode de réalisation, la chambre de mélange est munie d'au moins un moyen tel qu'un baffle comportant un ou plusieurs orifices pour laisser passer le fluide. De cette façon, la chambre est sous divisée en plusieurs chambres ou sous-chambres de mélange.

La communication entre un circuit d'injection et/ou de soutirage et la chambre de mélange, ou entre un circuit de pré-injection et la chambre de mélange s'effectue, par exemple, grâce à un ou plusieurs orifices disposés selon les parois des différentes chambres ou circuits. Les axes des orifices sont, par exemple, décalés les uns par rapport aux autres.

De cette façon, un fluide issu d'un orifice situé sur une paroi ne passe pas après avoir suivi une trajectoire directe au travers d'un orifice situé sur une autre paroi.

Le dispositif selon l'invention peut comporter des moyens de collecte et/ou des moyens de redistribution ayant une forme adaptée, par exemple, pour minimiser les écarts des temps de parcours des lignes de fluides avant leur entrée dans la chambre de mélange et/ou ceux des lignes du mélange de fluide issu de la chambre, après cette chambre et jusqu'à un point situé en aval de la chambre, le point considéré est, par exemple, le lit de solides granulaires.

Les moyens de collecte comportent par exemple une grille de collecte s'étendant sensiblement sur la totalité de la section du DME et/ou un espace de collecte, au moins l'un de ces éléments ayant une forme adaptée pour minimiser les écarts entre les temps de parcours des différentes lignes de flux du fluide principal avant leur entrée dans la chambre de mélange et/ou les moyens de redistribution comportent au moins une grille de redistribution s'étendant par exemple sensiblement sur toute la section du DME, au moins un de ces éléments ayant une forme adaptée pour minimiser les écarts entre les temps de parcours des différentes lignes de flux du fluide principal après la sortie de la chambre de mélange.

Le premier circuit d'injection et/ou de soutirage comporte, par exemple une ou plusieurs ouvertures O₁ disposées sur la paroi commune au premier circuit d'injection et/ou de soutirage et à la chambre de mélange, le deuxième circuit d'injection et/ou de soutirage comporte par exemple une ou plusieurs ouvertures O₂ disposées sur la paroi commune ou deuxième circuit et à ladite chambre de mélange. L'orientation des axes des ouvertures (O₁, O₂) est choisie, par exemple, pour que le fluide passant à travers ces ouvertures atteigne au moins une partie pleine de la paroi de ladite chambre de mélange.

L'axe des ouvertures situées sur la première (respectivement la deuxième paroi commune) est, par exemple, orienté de façon qu'un fluide issu de cette ouverture aille vers une partie pleine de ladite seconde paroi commune de ladite chambre de mélange (respectivement de la première paroi commune).

Avantageusement, les chambres de mélange, d'injection et/ou de soutirage du DME selon l'invention ont par exemple des géométries choisies et des orifices dont la répartition ou distribution est choisie pour optimiser la fonction de mélange de la chambre de mélange.

La largeur d'une chambre de mélange et/ou de soutirage mesurée entre deux parois opposées est, par exemple, comprise entre 10 et 100 mm et de préférence entre 20 et 60 mm et encore de préférence entre 30 et 50 mm.

Les moyens de collecte et/ou de redistribution comportent, par exemple, respectivement un espace de collecte et un espace de redistribution, l'un de ces deux espaces comportant par exemple au moins un moyen tel qu'un brise-jet.

Pour un DME comportant, par exemple, quatre circuits d'injection et/ou de soutirage qui sont disposés par rapport à la chambre de mélange et/ou de soutirage de façon à avoir au moins une paroi commune et des orifices de communication avec ladite chambre, les axes desdits orifices disposés sur la paroi commune sont, par exemple, orientés pour que le fluide aille frapper une partie pleine d'une autre paroi de ladite chambre de mélange et/ou de soutirage, ladite autre paroi étant une paroi non commune à ladite chambre de mélange et/ou de soutirage.

La chambre de mélange et/ou de soutirage peut aussi comporter des moyens promoteurs de turbulence situés à l'intérieur.

L'invention concerne aussi une colonne permettant la séparation d'un corps à partir d'un fluide comportant au moins plusieurs composés séparables selon la revendication 17.

Selon un mode particulier de réalisation, la colonne comporte au moins, un DME comprenant par exemple au moins quatre circuits d'injection et/ou de soutirage indépendants disposés selon au moins une des parois de la chambre de mélange, la paroi de la chambre ayant une direction sensiblement parallèle à l'axe de la colonne.

La chambre de mélange peut comporter un moyen, tel qu'un baffle, pourvu d'au moins un orifice laissant passer le fluide, pour sous-diviser ladite chambre de mélange en plusieurs sous-chambres de mélange.

Ce mode de réalisation permet notamment d'optimiser la fonction de mélange, en augmentant les turbulences au sein de chacune des parties, ce qui confère au dispositif notamment une meilleure collecte et/ou une meilleure distribution sous la grille. De plus, la tenue mécanique de l'ensemble est ainsi renforcée.

Les moyens de collecte et/ou les moyens de redistribution ont, par exemple, une forme adaptée pour minimiser les différences de temps de parcours des différences lignes de fluide ayant traversé au moins une partie d'un lit de solides granulaires avant leur entrée dans la chambre de mélange et/ou homogénéiser les temps de parcours des lignes de fluides issus de la chambre de mélange jusqu'à leur entrée dans le second lit disposé en aval du DME.

Elle comporte, par exemple, plusieurs DME disposés les uns à côté des autres et répartis selon une ou plusieurs sections de ladite colonne, les DME présentant les caractéristiques de la revendication 1.

Selon un mode avantageux de réalisation, on dispose plusieurs DME les uns à côté des autres et séparés par une distance ou un espace suffisant pour recevoir des moyens d'étanchéité qui se présentent, par exemple sous la forme d'une ou plusieurs tresses d'étanchéité.

L'espace séparant éventuellement les DME les plus proches de la paroi de la colonne et la paroi de la colonne est, par exemple, lui-même rempli avec des moyens d'étanchéité.

De cette manière, les différents lits de solides granulaires sont séparés de manière étanche les uns des autres et les solides granulaires les constituants ne peuvent passer d'un lit à un autre. L'étanchéité ainsi réalisée permet notamment de maintenir l'intégrité du lit de solides granulaires, ce dernier reste sensiblement tel qu'il a été chargé initialement.

L'étanchéité réalisée, le fluide principal ou liquide en écoulement dans la colonne se trouve obligé de passer en totalité à travers le DME, et donc à travers la chambre de mélange. Il n'y a pas de passage préférentiel d'un lit à l'autre sans passer par la chambre de mélange. Il s'ensuit un meilleur écoulement et une meilleure distribution du fluide principal sur toute la section de la colonne.

Lorsque la colonne comporte plusieurs DME, elle est équipée, par exemple, d'au moins un conduit principal de distribution d'un fluide, de l'extérieur de la colonne vers au moins une chambre d'injection et/ou de soutirage dédiée à un fluide, ledit conduit principal étant, par exemple, relié a au moins une desdites chambres d'injection et/ou de soutirage par l'intermédiaire d'une ramification, ledit conduit principal traversant la paroi extérieure de ladite colonne.

La présente invention concerne une colonne pour séparer au moins un corps d'un fluide comportant au moins plusieurs composés séparables. La cotonne comprend au moins un premier lit et un second lit de solides granulaires séparés par un ou plusieurs DME qui présente les caractéristiques de la revendication 1.

Selon un mode de réalisation de l'invention, la colonne comporte, par exemple:
. au moins un moyen de "supportage" disposé sensiblement le long d'un axe longitudinal de la colonne,
. une ou plusieurs poutres principales, la ou lesdites poutres étant reliées au moyen de supportage,
. un ou plusieurs DME présentant les caractéristiques des revendications 1 à 16, lesdits DME étant disposés pour une même section autour des moyens de supportage et au-dessus de la ou des poutres principales, lesdits DME étant séparés les uns des autres par des moyens d'étanchéité, lesdits DME étant disposés entre un premier et un second lit de solides granulaires et lesdites poutres principales étant noyées dans le second lit de solides granulaires,
. au moins un moyen principal de distribution et/ou de soutirage d'un fluide vers un circuit d'injection et/ou de soutirage,
. au moins un moyen principal de distribution et/ou de soutirage d'un fluide vers un circuit d'injection et/ou de soutirage.

La présente invention trouve avantageusement son application pour réaliser la séparation d'un corps chromatographique.

Ainsi, les avantages offerts par le DME selon l'invention sont notamment les suivants :
. l'indépendance des circuits d'injection et/ou de soutirage de fluides secondaires permet d'éviter des phénomènes de pollutions éventuelles et des opérations de purge des reliquats de fluide à l'intérieur de conduits habituellement communs,
. la forme appropriée des moyens de collecte et/ou des moyens de redistribution permet d'améliorer la propagation des fronts de fluide dans la colonne en minimisant les différences de temps de parcours des différents lignes de fluide en aval du DME ou en amont, ce qui permet d'obtenir un écoulement de type piston,
. de minimiser les volumes morts par un choix approprié des formes des espaces de collecte,
. les phénomènes de rétromélange, ainsi que les pertes de charges, pouvant nuire à la séparation des corps effectuée dans la zone en amont de ce DME sont minimisés du fait du choix approprié des orifices de passage et de leur distribution,
. il induit une perte de charge aussi faible que possible pour la circulation du fluide principal à travers la colonne.

La présence de moyens de supportage de DME positionnés au sein de la colonne permet de plus d'augmenter la résistance mécanique de l'ensemble, si nécessaire.

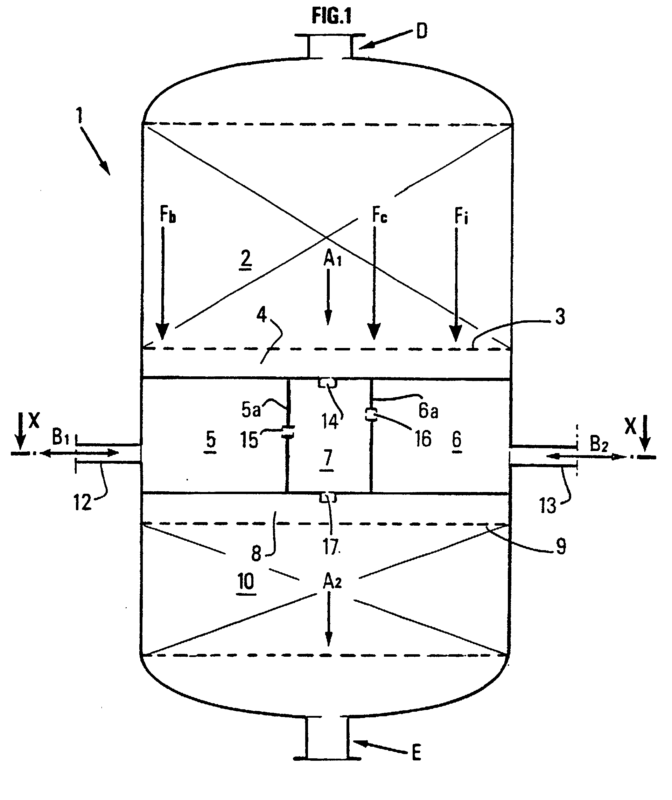

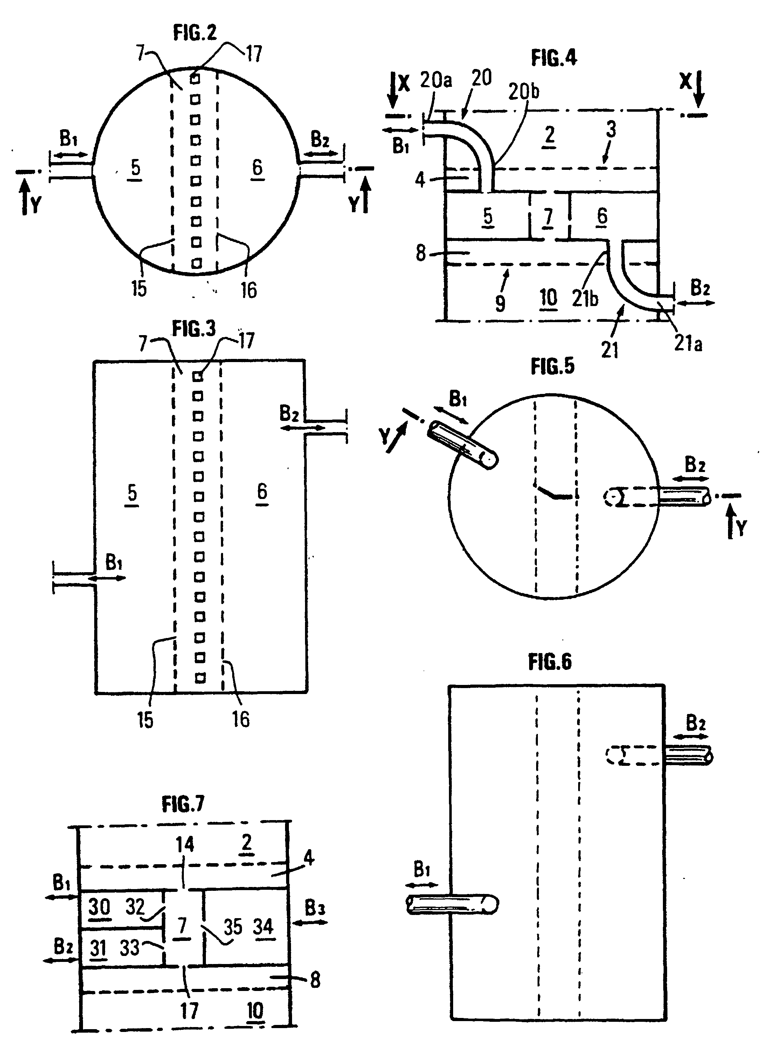

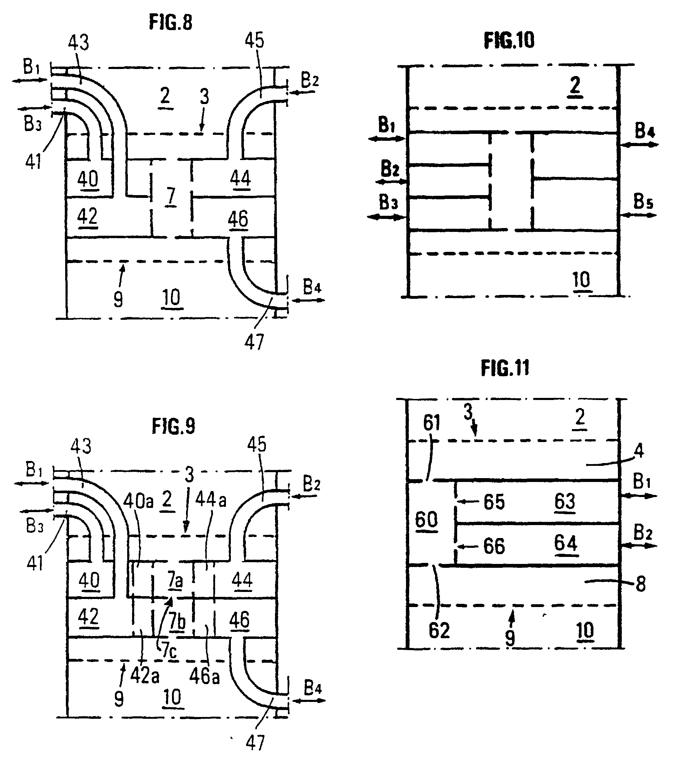

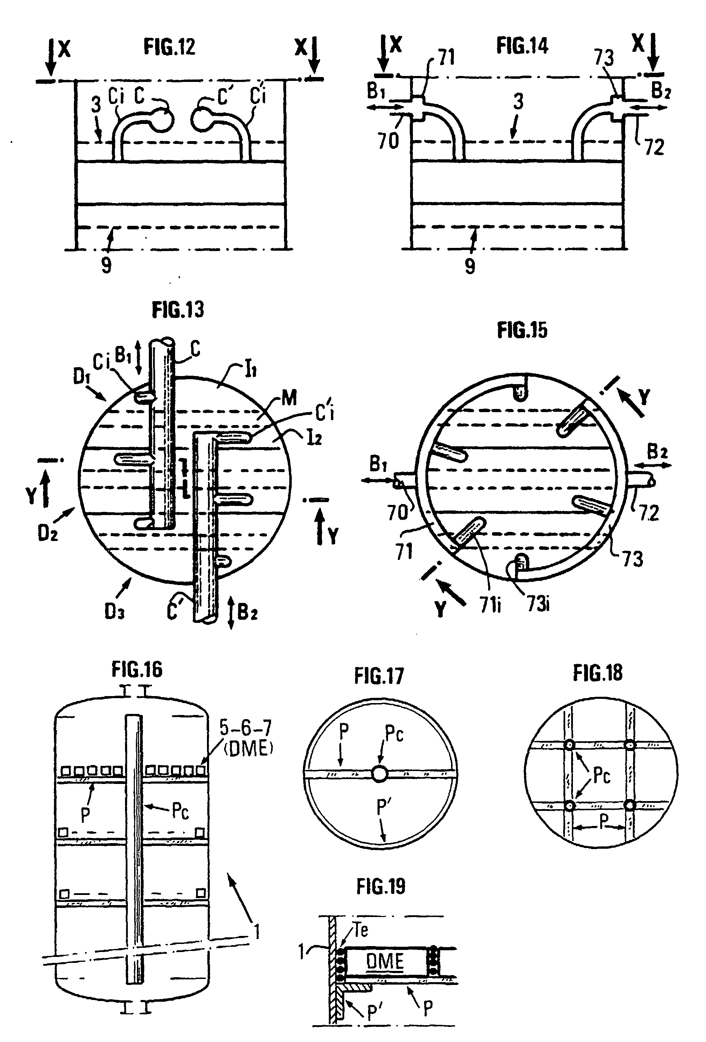

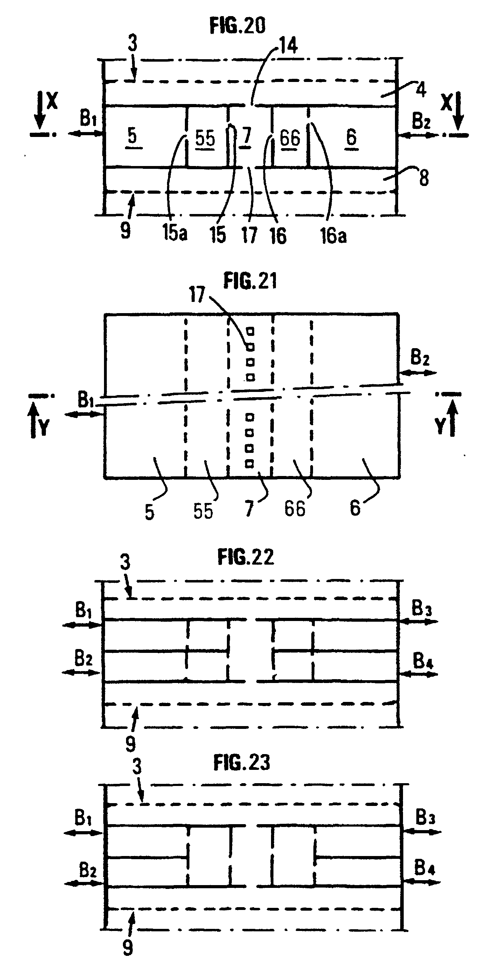

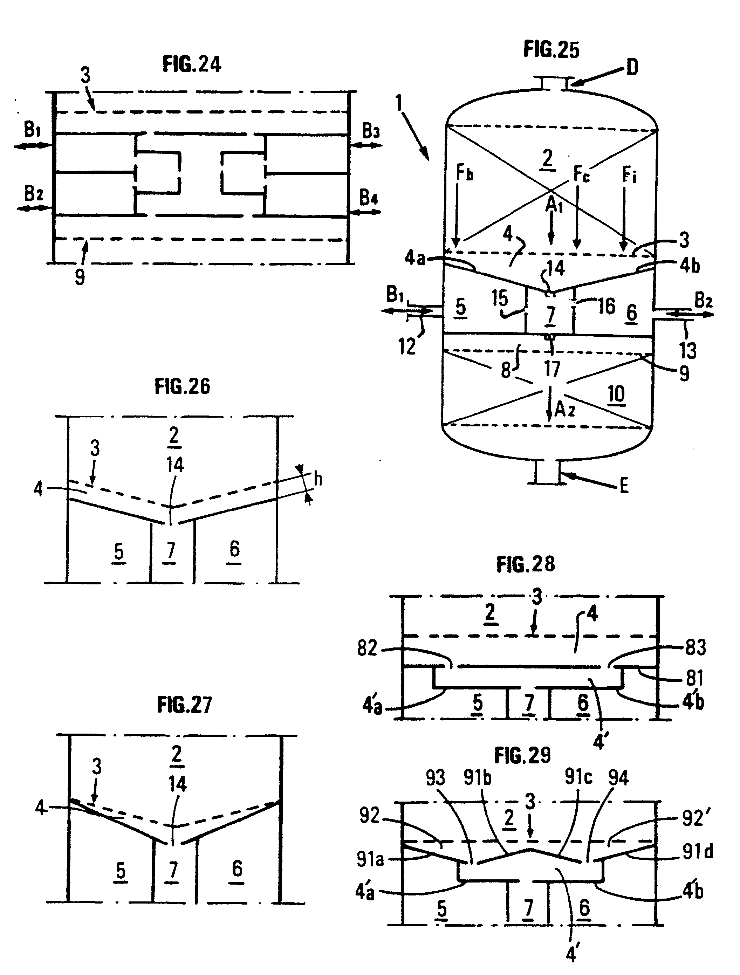

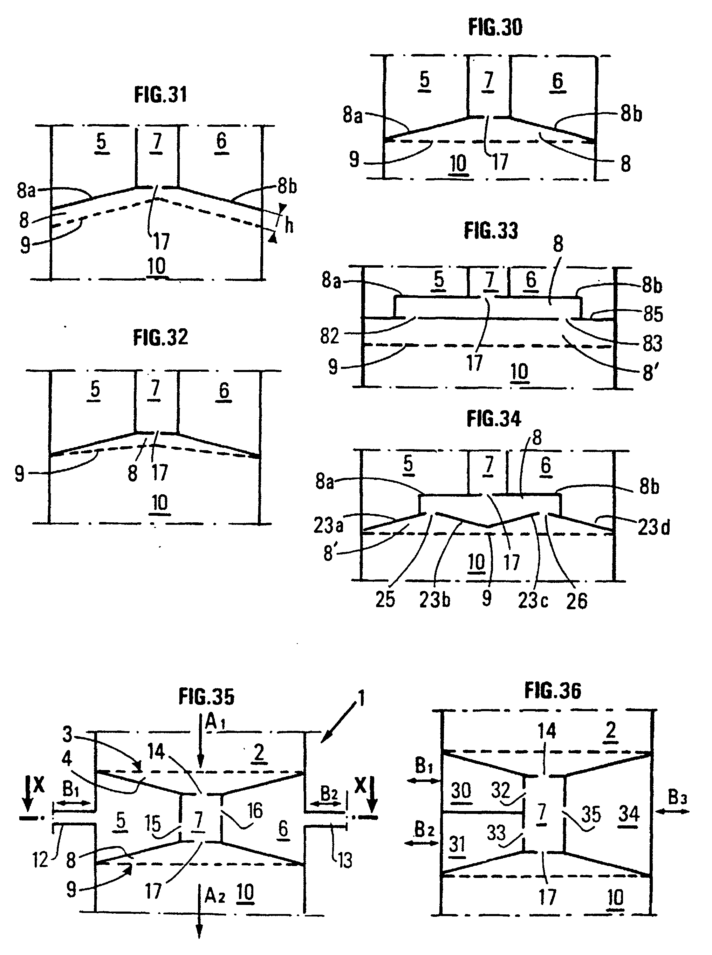

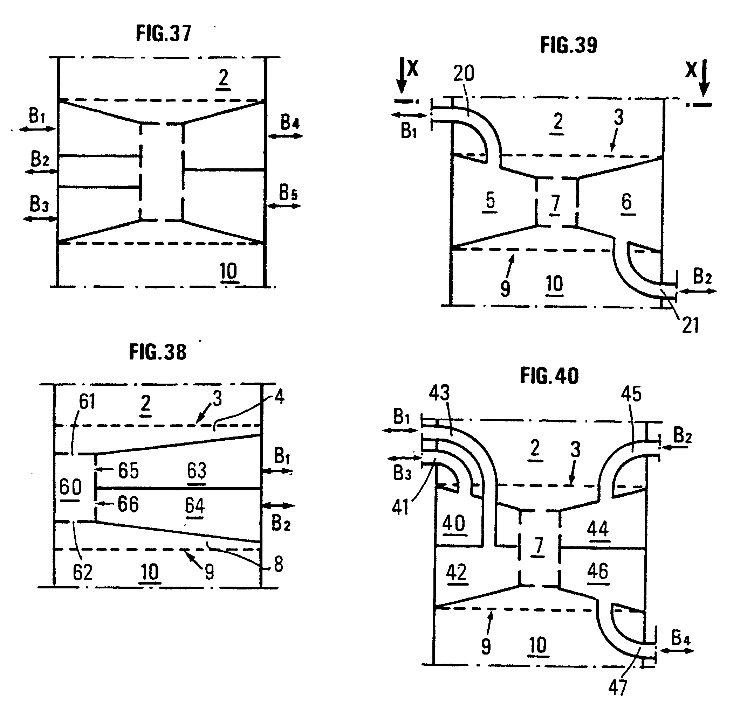

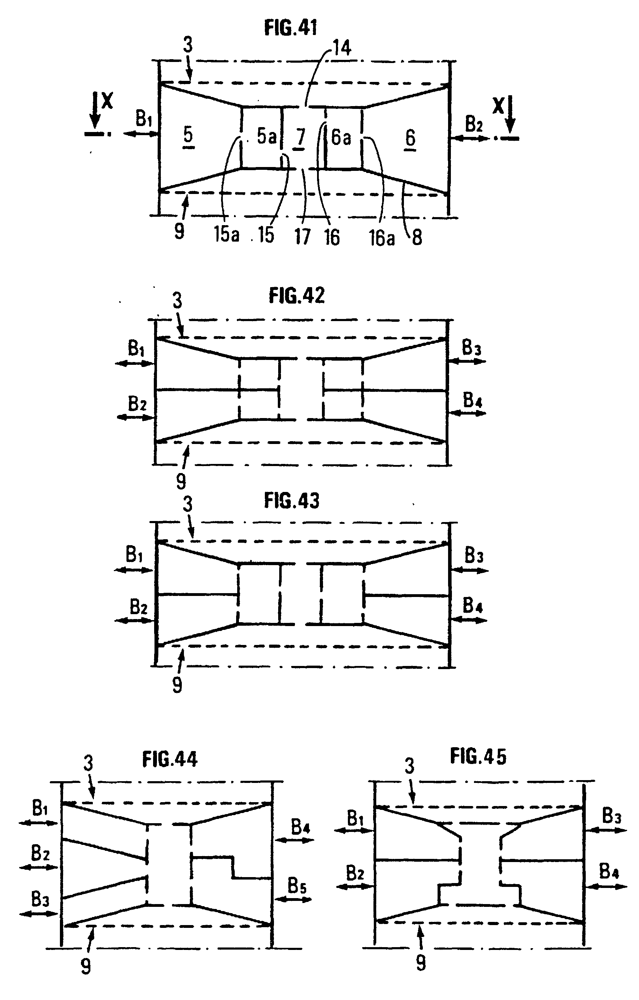

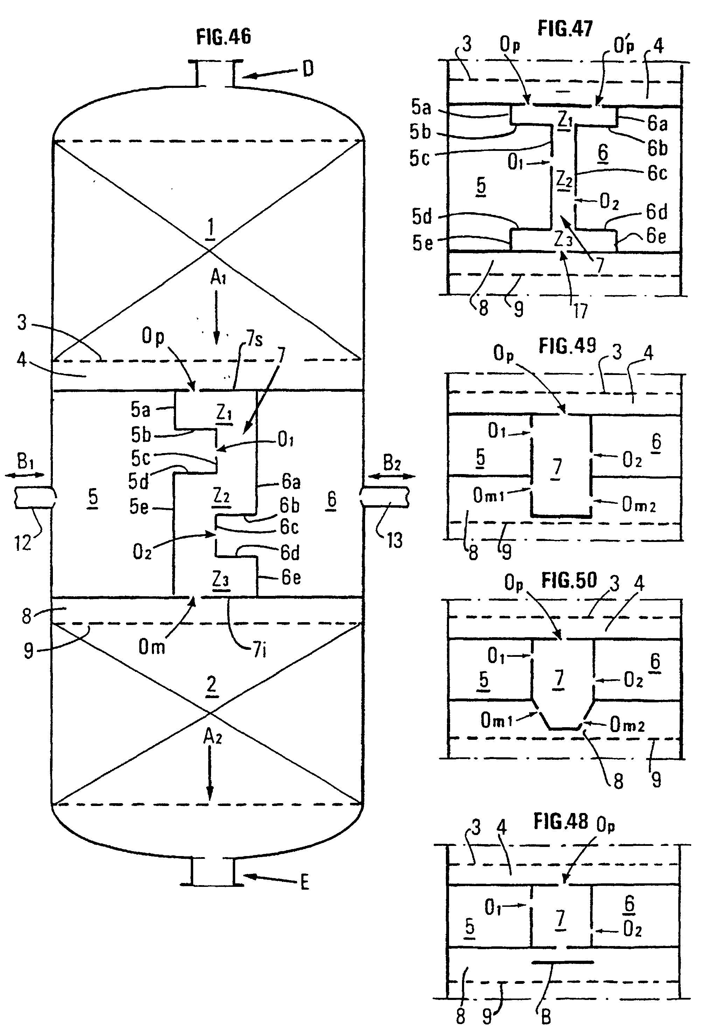

D'autres caractéristiques et avantages de la méthode selon l'invention, apparaîtront à la lecture de la description donnée ci-après, à titre illustratif et nullement limitatif, en se référant aux dessins annexés où :
. les figures 1, 2 et 3 schématisent un DME selon l'invention comprenant deux circuits d'injection et/ou de soutirage de fluides secondaires,
. les figures 4, 5 et 6 montrent une possibilité pour disposer les conduits d'injection et/ou d'extraction des fluides secondaires faisant partie des circuits d'injection et/ou de soutirage,
. les figures 7 et 10 montrent deux exemples de DME selon l'invention comprenant trois et cinq circuits d'injection et/ou de soutirage indépendants,
. les figure 8 et 9 schématisent un exemple de DME comportant quatre circuits d'injection et/ou de soutirage ainsi que la répartition des conduits d'injection et/ou de soutirage associés, et une variante de réalisation où la chambre de mélange est divisée en deux sous-chambres de mélange,
. la figure 11 montre une variante de réalisation du DME pour laquelle les différents circuits d'injection et/ou de soutirage des fluides secondaires sont positionnés d'un même côté de la chambre de mélange,
. les figures 12, 13, 14 et 15 montrent des exemples de distribution des conduites d'injection et/ou de soutirage selon le nombre et la position des chambres dans la colonne,
. les figures 16, 17 et 18 décrivent un agencement de plusieurs DME pour une colonne de grande section, munie de moyens permettant de renforcer la tenue mécanique pour le supportage des DME,
. la figure 19 schématise la disposition de plusieurs DME à l'intérieur d'une colonne de grande section et les moyens d'étanchéité entre les DME,
. les figures 20 et 21 montrent respectivement une vue en coupe et une vue de dessus d'un DME comportant des préchambres associées aux chambres d'injection et/ou de soutirage des fluides secondaires,
. les figures 22, 23, 24 montrent différentes variantes d'agencement de chambres d'injection et/ou de soutirage et de préchambres associées,
. la figure 25 montre une variante de la figure 1 comportant un espace de collecte du fluide principal adapté pour minimiser les différences de temps de parcours entre les différentes lignes de ce fluide à travers le lit supérieur et l'espace de collecte,
. les figures 26, 27, 28 et 29 schématisent plusieurs géométries pour les espaces de collecte,
. les figures 30, 31, 32, 33 et 34 représentent différentes formes pouvant être prises par l'espace de redistribution,
. les figures 35, 36, 37 et 38 schématisent des variantes de réalisation pour la géométrie des espaces de collecte et de redistribution du DME des figures 7, 10 et 11
. les figures 39 et 40 montrent des variantes de réalisation du DME décrit aux figures 4 et 8,
. les figures 41, 42 et 43 schématisent des variantes de réalisation du DME représentés aux figures 20, 22 et 23,
. les figures 44 et 45 représentent des variantes de réalisation du DME avec des formes variables pour les chambres d'injection et/ou de soutirage,
. la figure 46 représente schématiquement le DME de la figure 1 avec une chambre de mélange dont la forme est adaptée pour optimiser la fonction mélange,
. la figure 47 montre une autre variante de réalisation où la chambre de mélange est pourvue de plusieurs séries d'orifices d'introduction d'un fluide circulant en aval,
. la figure 48 schématise une variante de réalisation du dispositif selon l'invention associant des moyens mécaniques, tels des brise-jets disposés au niveau de l'espace de redistribution,
. les figures 49 et 50 schématisent deux variantes de réalisation de la chambre de mélange dont deux parois se prolongent au moins sur une partie d'un espace de redistribution disposé en aval du dispositif

La figure 1 schématise un exemple de réalisation d'une colonne 1 équipée d'un DME donné pour expliciter le principe de l'invention. Elle comprend, par exemple, un orifice D permettant d'introduire un fluide principal A₁ et un orifice E situé à l'extrémité opposée de l'orifice d'introduction D. Ces deux orifices E et D sont situés de préférence selon l'axe principal ou longitudinal de la colonne vertical ou horizontal selon sa position. A l'intérieur de cette colonne, au moins un premier et un deuxième lit de solides granulaires respectivement référencés 2 et 10 chargés initialement, sont séparés par au moins un distributeur-mélangeur-extracteur selon l'invention, ou DME, comprenant les éléments suivants :
. des moyens de collecte d'un fluide principal A₁ en circulation dans la colonne à travers par exemple le premier lit de solides granulaires 2, comprenant par exemple, une grille de collecte 3 et un espace de collecte 4,
. une chambre de mélange 7 qui comporte un ou plusieurs orifices 14 d'introduction du fluide principal en circulation dans la colonne et au moins un orifice de sortie 17, les orifices sont de préférence des orifices calibrés pouvant se présenter sous différentes formes comme il est détaillé ci-après,
. deux circuits d'injection et/ou de soutirage d'un premier et d'un deuxième fluide secondaire B₁ et B₂, comprenant chacun respectivement par exemple un conduit 12, 13 débouchant dans une chambre d'injection et/ou de soutirage 5, 6 disposées, par exemple, à proximité de la chambre de mélange et communiquant avec cette dernière par une ou plusieurs ouvertures 15, 16 situées sur une paroi commune 5a, 5b aux chambres d'injection et/ou de soutirage et à la chambre de mélange,
. des moyens de distribution du mélange de fluides réalisé à l'intérieur de la chambre de mélange 7 et évacué par l'orifice de sortie 17 situé sur la paroi inférieure de la chambre de mélange, ces moyens comportant par exemple un espace de distribution 8 et une grille de redistribution 9. L'orifice de sortie est, de préférence, un orifice calibré.

Les deux circuits d'injection et/ou de soutirage sont indépendants et communiquent avec l'extérieur avec des sources de fluides secondaires ayant des natures ou des compositions différentes ou encore des enceintes permettant de récupérer les fluides, distinctes elles aussi, et non représentées sur la figure.

Les ouvertures 15, 16 permettent ainsi le soutirage et/ou l'injection de fluides à partir de la chambre de mélange et/ou vers la chambre de mélange.

La dimension et la répartition des orifices 14 d'introduction du fluide principal A₁, des orifices 17 de sortie de la chambre de mélange, ainsi que des orifices 15 et 16 sont choisies, de préférence, pour obtenir une perte de charge ou une perte de pression, et une vitesse suffisante pour générer des turbulences dans la chambre de mélange 7. De cette façon, on obtient un fort rétromélange et on augmente l'efficacité du mélange du fluide principal A₁, et des fluides secondaires B₁, B₂. Un tel agencement permet aussi d'isoler la chambre de mélange 7 des espaces de collecte et de redistribution, et de réduire au maximum le passage direct de courant de fluides secondaires vers les espaces de collecte et de redistribution.

Les orifices d'entrée 14 de la chambre de mélange 7 sont, par exemple, des séries de trous calibrés ou des fentes ou séries de fentes calibrées continues ou non continues, de préférence, régulièrement espacés pour réaliser une collecte aussi uniforme que possible du fluide principal A₁ avant son introduction dans la chambre de mélange 7.

La dimension et la géométrie de ces orifices sont choisies pour que le fluide en entrant dans la chambre de mélange ait une vitesse favorable pour créer à l'intérieur des turbulences et en même temps, pour générer une perte de charge permettant de confiner ces turbulences à l'intérieur de la chambre de mélange.

Ainsi, l'espacement entre les orifices d'entrée 14 du fluide A₁ est, par exemple, compris entre 30 et 150 mm et de préférence entre 50 et 100 mm. La vitesse du fluide à travers les orifices résultant d'un tel espacement varie par exemple entre 1 et 5 m/s, et de préférence entre 2 et 3 m/s. La perte de charge générée en sortie des orifices est comprise entre 10 et 100 g/cm² et de préférence entre 30 et 60 g/cm².

Les voies de sortie 17 d'un fluide de la chambre de mélange sont par exemple formées par une série de trous calibrés ou de fentes calibrées continues ou discontinues, de préférence, régulièrement espacés de façon à redistribuer le fluide de la manière la plus uniforme possible vers l'espace de redistribution 8. Le fluide issu de la chambre résulte par exemple du mélange d'au moins un fluide principal avec au moins un fluide secondaire ou encore d'un fluide remélangé à l'intérieur de la chambre de mélange.

La dimension de ces trous ou de ces fentes 17 est choisie, par exemple, pour générer une certaine perte de charge permettant de confiner les turbulences du mélange à l'intérieur de la chambre de mélange 7. La valeur de la perte de charge est comprise par exemple entre 10 et 100 g/cm² et de préférence entre 30 et 60 g/cm². Cette valeur de perte de charge correspond notamment à un espacement des trous ou des fentes variant de 30 à 150 mm et, de préférence de 50 à 100 mm. Ces valeurs permettent par exemple d'obtenir une valeur de vitesse pour le fluide en sortie de la chambre de mélange comprise entre 1 et 5 m/s, de préférence entre 2 et 3 m/s.

De cette manière, on optimise la collecte du fluide provenant de la chambre de mélange et sa bonne distribution, le fluide passant ensuite dans l'espace de redistribution 8 et enfin à travers la grille de redistribution 9.

Les orifices 15, 16 d'introduction ou de soutirage des fluides secondaires B₁ et B₂ sont, par exemple formés par une série de trous calibrés, de préférence, régulièrement espacés pour injecter et/ou soutirer un fluide secondaire B₁, B₂ de façon la plus uniforme possible vers la chambre de mélange 7 ou à partir de cette chambre. Ces orifices sont par exemple dimensionnés pour que la vitesse linéaire d'un fluide secondaire entrant dans la chambre de mélange soit suffisamment importante pour favoriser la création de turbulences à l'intérieur de cette chambre et pour obtenir une perte de charge significative. Les orifices 15, 16 peuvent aussi se présenter sous la forme de fentes continues ou discontinues calibrées.

La vitesse du fluide à travers les orifices de sortie 15, 16 est, par exemple, comprise entre 1 et 15 m/s, de préférence entre 5 et 10 m/s. L'espacement entre les trous est choisi, par exemple entre 30 et 150 mm et de préférence entre 50 et 100 mm. La perte de charge correspondante varie entre 100 et 2000 g/cm² et de préférence entre 200 et 1000 g/cm².

Comme le montrent les figures 2 et 3, les orifices 15 et 16 sont agencés le long des parois communes à une chambre d'injection et/ou de soutirage et à la chambre de mélange pour que le fluide passant à travers vienne frapper une paroi pleine de la chambre de mélange située à l'opposé de la paroi comportant les orifices. La distribution de ces orifices est choisie, par exemple, pour qu'ils soient décalés les uns par rapport aux autres afin d'éviter le passage d'un fluide secondaire vers une chambre qui ne lui est pas dédiée.

L'efficacité du mélange dans la chambre de mélange 7 peut aussi être obtenue en choisissant la géométrie et les dimensions des chambres d'injection et/ou de soutirage pour assurer un débit des fluides sensiblement identique sur tous les orifices de sortie. Par exemple, le rapport de la longueur développée des chambres à leur largeur moyenne ou équivalente, est par exemple inférieur à 30, de préférence inférieur à 20, et de préférence inférieur à 10.

Avantageusement, la largeur de la chambre de mélange est choisie par exemple en fonction de la valeur de la vitesse d'un des fluides secondaires débouchant par un des orifices 15, 16 dans la chambre de mélange pour que le fluide secondaire rencontre la paroi de la chambre de mélange située en face de la paroi d'où provient ce fluide. De cette façon, on améliore et on optimise la fonction mélange de cette chambre.

Les grilles de collecte et de redistribution se présentent, par exemple, sous la forme d'une grille ou d'un tamis métallique. On peut utiliser des grilles habituelles de type Johnson ou équivalentes, en acier ou en inox.

L'espacement des fils ou éléments formant cette grille est, de préférence, de l'ordre de 0,15mm et plus ou moins de 0,05mm. La valeur de cet écartement est choisi pour obtenir un bon écoulement du fluide circulant dans le premier lit vers l'espace de collecte tout en évitant que les grains solides du lit obstruent cet écartement, ou puissent passer entre les fils de la grille.

Certains se présentent, par exemple, sous la forme de fils soudés sur de petites poutres ou rods, ou encore sur des poutres de taille plus importantes ayant, par exemple, une hauteur comprise entre 10 et 15mm.

La figure 3 montre ainsi deux chambres d'injection et/ou de soutirage 5, 6 ayant une forme rectangulaire allongée. Les chambres sont, par exemple, accolées à une chambre de mélange 7 ayant une forme sensiblement identique et de part et d'autre de cette chambre. L'ensemble mécanique ainsi constitué se présente sous la forme d'un caisson, ayant par exemple une forme sensiblement plate.

Ce caisson sépare, par exemple, en totalité et pratiquement sur toute la section de la colonne, l'espace de collecte 4, et l'espace de redistribution 8.

Selon un autre mode de réalisation, le DME se présente par exemple sous la forme d'une "galette" sensiblement plate, disposée par exemple horizontalement lorsque l'axe de la colonne est vertical, ayant de préférence une épaisseur réduite, la forme périphérique pouvant être circulaire.

L'ensemble ainsi obtenu se présente avantageusement sous forme d'un caisson qui assure à la fois des fonctions de collecte, distribution et/ou mélange et/ou soutirage de fluides en même temps qu'une fonction de supportage.

Selon un mode préféré, le lit de solides granulaires est chargé à l'aide d'un appareillage approprié, tel que celui décrit dans le brevet FR-2.721.900 du demandeur.

Avantageusement, les particules formant le lit ont des diamètres de l'ordre de 0,4 à 1mm. Le remplissage de la colonne s'effectue de façon que ces particules tombent en pluie sans frottement mécanique de préférence.

De cette manière, on obtient un remplissage de la colonne reproductible, dense et homogène. Le remplissage selon ce mode permet de minimiser les volumes morts interstitiels entre les particules, et les risques de "channeling" ou de passage préférentiel du fluide, allant à l'encontre de la forme d'écoulement piston recherchée.

On obtient ainsi un lit de particules ayant une structure sensiblement stable dans le temps, le tassement ultérieur de ce lit étant très réduit, voire nul.

Le chargement s'effectue par exemple à partir de la tête de la colonne, ou de son extrémité supérieure, la colonne pouvant lors de chargement, être équipée et comporter ou non des moyens permettant de supporter les DME décrits aux figures suivantes.

On peut par exemple envoyer les particules au moyen de l'appareillage précité avec une vitesse de chargement de l'ordre de 1cm/min maximum, ce qui permet de remplir une hauteur de lit de particules d'environ 1m en deux à trois heures environ.

Avantageusement, le chargement de la colonne est réalisé sous atmosphère sèche de façon à contrôler le degré d'hydratation du lit de particules, paramètre important dans le procédé. Si l'atmosphère est humide, les particules (tamis moléculaire) se chargent d'eau, ce qui peut endommager le tamis au démarrage et nécessiter une longue phase de séchage.

Le procédé mis en oeuvre à l'aide de ce dispositif (DME) disposé entre deux lits de solides granulaires comporte, par exemple, les étapes suivantes données uniquement à titre d'illustration, nullement limitatif :

On introduit par exemple un fluide principal A₁ par l'ouverture supérieure de la colonne D. Ce fluide circule à travers le premier lit supérieur 2 avant d'être collecté de la manière la plus uniforme possible au niveau de la grille de collecte 3 et de l'espace de collecte 4. Il pénètre dans la chambre de mélange 7 par les orifices calibrés 14, disposés, par exemple, sensiblement sur toute la longueur de la paroi supérieure de la chambre de mélange. On obtient ainsi une introduction du fluide principal sensiblement uniforme dans cette chambre, tout en générant des turbulences bénéfiques à l'efficacité du mélange à l'intérieur de cette chambre.

L'injection des fluides secondaires B₁ et B₂ dans les chambres distinctes d'injection et/ou de soutirage s'effectue par exemple séquentiellement, mais selon un schéma sensiblement identique de la manière suivante :
- le fluide secondaire B₁ (respectivement B₂) est amené et introduit dans la chambre 5 (6) par la tubulure 12 (13), pour être injecté dans la chambre de mélange 7 par les orifices calibrés 15 (16), répartis par exemple de façon uniforme sur toute la longueur de la chambre de manière à obtenir une injection uniforme. Cette injection s'effectue à une vitesse d'injection élevée favorable à l'efficacité du mélange d'un fluide secondaire B₁, B₂ avec le fluide principal A₁ du fait de la création de fortes turbulences dans un espace confiné, délimité par la chambre de mélange 7 et les orifices 14, 17 au moins.

Inversement, les fluides secondaires B₁ et B₂ peuvent être soutirés à travers le même dispositif (DME). Les orifices calibrés 15, 16 permettent un prélèvement uniforme de fluides et une collecte uniforme de ces fluides 5, 6 dans la chambre. Les fluides sont ensuite soutirés par les tubulures 12, 13.

Les figures 4, 5 et 6 schématisent selon plusieurs coupes des exemples d'agencement pour les conduites d'injection et/ou de soutirage des fluides secondaires B₁ et B₂ dans le cas d'une colonne comprenant deux chambres d'injection et/ou de soutirage.

La conduite 20 d'injection et/ou de soutirage d'un premier fluide B₁ est composée par exemple d'une première partie 20a qui traverse la colonne 1 radialement, cette première partie étant prolongée par une seconde partie 20b qui traverse la grille et l'espace de collecte 3, 4 par exemple selon une direction sensiblement parallèle à l'axe longitudinal de la colonne pour déboucher au niveau de la paroi supérieure de la chambre d'injection et/ou de soutirage 5.

La conduite 21, qui présente par exemple une géométrie sensiblement similaire, comporte une première partie 21a et une seconde partie 21b, et est amenée au niveau de la paroi inférieure de la deuxième chambre 6 d'injection et/ou de soutirage à travers la grille 8 et l'espace de redistribution.

Dans les exemples de réalisation décrits sur ces trois figures, les orifices 15, 16 sont décalés pour éviter le passage du fluide B₁ dans la chambre 6 et le passage du fluide B₂ dans la chambre 5.

La figure 7 montre un exemple de dispositif comprenant trois chambres d'injection et/ou de soutirage de trois fluides secondaires respectivement B₁, B₂, B₃.

La chambre 30 d'injection et/ou de soutirage voit le passage par exemple d'un premier fluide B₁, et est disposée par exemple au-dessus de la chambre d'injection et/ou de soutirage 31 qui voit le passage d'un deuxième fluide secondaire B₂ distinct par exemple du premier fluide B₁. Chacune de ces chambres 30, 31 communiquent avec la chambre de mélange 7 grâce à un ou plusieurs orifices 32, 33 ayant des axes d'injection orientés de préférence pour qu'un jet de fluide passant à travers débouche sur une paroi pleine de la chambre de mélange 7, située par exemple en face des parois comprenant les orifices 32, 33. De cette façon, on évite ou on minimise le passage des fluides issus des chambres 30, 31 vers une autre chambre d'injection et/ou de soutirage.

Ces deux chambres sont, par exemple, disposées d'un même coté de la chambre de mélange, le long d'une paroi ayant une direction sensiblement parallèle à l'axe vertical de la colonne.

De l'autre côté de cette chambre, se trouve disposée une troisième chambre d'injection et/ou de soutirage 34 qui a par exemple une hauteur sensiblement identique à la hauteur additionnée des deux chambres 30 et 31. Elle communique avec la chambre de mélange 7 par un ou plusieurs orifices calibrés 35 dont l'axe débouche sur une paroi pleine de la chambre de mélange.

Un tel agencement permet aux différents fluides secondaires B₁, B₂, B₃ injectés dans la chambre de mélange d'aller "s'écraser" sur une paroi pleine ou de la percuter de manière à les mélanger intimement au sein de la chambre de mélange 7. On évite de plus le passage de fluides secondaires ayant des natures différentes dans des chambres qui ne leur sont pas dédiées.

Les moyens de collecte et/ou de redistribution du mélange présentent des caractéristiques sensiblement similaires à celles des espaces décrits aux figures précédentes.

Il en est de même des caractéristiques des orifices 14 d'introduction et de sortie 17 du fluide principal dans la chambre de mélange, ainsi que des orifices de passage des différents fluides secondaires des chambres d'injection et/ou de soutirage de la chambre ou vers la chambre de mélange.

La figure 8 montre un exemple d'agencement de quatre chambres d'injection et/ou de soutirage 40, 42, 44 et 46, et la répartition des différents conduits pour les fluides B₁, B₂, B₃ et B₄ par rapport à la colonne.

Dans ce cas, les conduites respectivement 41, 43 et 45, 47 sont utilisées pour introduire et/ou soutirer les quatre fluides B₁, B₂, B₃ et B₄.

Les conduites 41 et 43 peuvent avoir des formes et des parcours similaires à ceux décrits sur la figure 4 pour atteindre les deux chambres d'injection et/ou de soutirage 40 et 42, en traversant la paroi supérieure de chacune de ces chambres, la conduite 43 traversant la chambre 40 selon un axe sensiblement parallèle à l'axe principal ou longitudinal de la colonne et sur toute la hauteur de la chambre 40 lorsque cette dernière occupe toute la section de la colonne, ou dans le cas où cette chambre est positionnée au-dessus de la chambre 42 et a une section supérieure à la section de la chambre 40.

La conduite 45 passe à travers une des parois longitudinales de la colonne 1 de manière radiale pour rejoindre selon un parcours ayant une géométrie sensiblement identique à celui de la conduite 43 la paroi supérieure de la chambre d'injection et/ou de soutirage 44, alors que dans cet exemple de réalisation, la conduite 47 adopte un parcours similaire pour rejoindre la chambre d'injection et/ou de soutirage 46 au niveau de sa paroi inférieure.

Il est bien entendu que sans sortir du cadre de l'invention les parcours et géométries des différentes conduites peuvent être adaptés en fonction des paramètres suivants :

la géométrie de la colonne, le nombre et la géométrie des différentes chambres, les conditions d'accès à la colonne.

La figure 9 montre une variante de réalisation du DME de la figure 8, pour lequel la chambre de mélange 7 est sous divisée en deux parties ou sous-chambres de mélange 7a et 7b, à l'aide d'un baffle ou paroi 7c pourvue par exemple d'un ou plusieurs orifices calibrés, qui se présentent par exemple sous forme de trous calibrés, ou de fentes calibrées continues ou discontinues pouvant se présenter selon le sens longitudinal ou selon un autre sens de la paroi ou du baffle.

En sous divisant la chambre de mélange, on optimise l'effet créé par les turbulences des fluides au sein de la première sous chambre de mélange 7a, avant de passer dans la deuxième sous chambre de mélange 7b. On améliore de cette façon l'effet résultant des turbulences de fluide dans l'ensemble de la chambre de mélange.

On a représenté sur cette figure, disposée entre une sous-chambre de mélange 70, 76 et une chambre de distribution et/ou de soutirage (40, 44) ; (42, 46), une préchambre détaillée aux figures 20 et 21 par exemple.

La figure 10 schématise un exemple de DME comprenant cinq circuits indépendants d'injection et/ou de soutirage de fluides secondaires.

Cet exemple de réalisation peut être particulièrement intéressante par exemple pour amener un fluide auxiliaire servant par exemple dans des opérations de rinçage ou de purification ultime avant soutirage d'un produit de haute pureté. Dans cet exemple, les axes des orifices respectent toujours un critère d'orientation et de distribution pour que le fluide passant à travers vienne frapper une partie pleine d'une paroi de la chambre.

Sur la figure 11, on a décrit un mode de réalisation de DME où la chambre de mélange 60 est située sur un côté du DME et possède ainsi une paroi commune avec une des parois longitudinales de la colonne 1. Elle est pourvue du coté de l'espace de collecte 4 d'au moins un orifice 61 pour laisser passer le fluide principal A₁, cet orifice présentant par exemple des caractéristiques sensiblement similaires à celles des orifices 14 (figure 1) et d'un ou plusieurs orifices calibrés 62 permettant le passage du mélange, ces orifices ayant, par exemple, des caractéristiques sensiblement identiques aux caractéristiques des orifices 17 (figure 1).

Les deux chambres 63, 64 d'injection et/ou de soutirage des deux fluides secondaires B₁, B₂ sont positionnées sur un même côté de cette chambre de mélange 60, par exemple, selon une paroi dont la direction est sensiblement parallèle à l'axe de la colonne, la chambre 63 étant par exemple disposée au-dessus de la chambre 64. Les chambres d'injection et/ou de soutirage communiquent avec l'extérieur par des conduits tels que les conduits 12, 13 non représentés pour des soucis de clarté et communiquent avec la chambre de mélange 60 grâce à un ou plusieurs orifices 65, 66 déterminés par des critères semblables aux orifices 15 et 16 (figure 1), par exemple.

Lorsque la colonne présente une section importante, il peut être intéressant de l'équiper de plusieurs DME, et d'insérer des moyens de supportage de ces DME.

Il est avantageux de disposer plusieurs DME, par exemple, les uns à côté des autres, plutôt qu'un seul DME qui aurait une taille sensiblement identique à la taille obtenue par l'ensemble de ces DME dans la colonne mais qui conduirait à des difficultés de réalisation notamment mécanique plus importante. Du fait de l'indépendance des chambres d'injection et/ou de soutirage des fluides secondaires, un tel agencement peut conduire à un nombre de tubulures ou conduites non négligeable, traversant la ou les parois de la colonne et pouvant encombrer la colonne et augmenter sa complexité. Dans ce cas, il s'avère intéressant d'adopter une configuration pour les tubulures d'arrivée de ces fluides secondaires, selon un schéma, par exemple décrit aux figures 12, 13, 14 et 15.

Sur ces figures, les différentes tubulures Ci permettant d'injecter et/ou de soutirer un fluide secondaire de nature spécifiée, sont réunies à l'intérieur de la colonne au niveau d'une tubulure ou conduite C. Seule la conduite principale C traverse en un ou plusieurs endroits les parois de la colonne.

Par exemple sur les figures 12 et 13, les conduites C et C' permettant respectivement d'injecter et /ou de soutirer les fluides B₁ et B₂, possèdent des ramifications Ci et C'i qui permettent le passage des fluides secondaires vers les chambres d'injection et/ou de soutirage appropriées. On entend par chambre appropriée, la chambre qui est destinée à recevoir, aussi bien dans les étapes de soutirage que dans les étapes d'injection de fluides secondaires, un fluide et un seul, ou éventuellement des fluides compatibles entre eux.

Sur la figure 13, une section de la colonne est équipée de trois DME D₁, D₂, D₃ positionnés les uns à côté des autres et présentant chacun des caractéristiques sensiblement identiques par exemple à celles du DME décrit à la figure 1. Ils comportent chacun au moins une chambre de mélange M et deux chambres d'injection et/ou de soutirage I₁ et I₂ situées de part et d'autre de la chambre de mélange M.

Les conduites principales C et C' sont disposées, par exemple, au-dessus des DME comme le montre la figure 12, horizontalement et selon une direction radiale, par exemple et les ramifications Ci, C'i partent des conduites principales C et C' selon une direction sensiblement perpendiculaire par exemple pour rejoindre les chambres d'injection et/ou de soutirage de type I₁, I₂ respectivement. Il est bien entendu que sans sortir du cadre de l'invention la disposition horizontale ou verticale de ces conduites et de leur ramifications, ainsi que leur géométrie dépend du mode et de la position de la colonne, par exemple, cette dernière pouvant être utilisée horizontalement ou verticalement, et de la disposition des DME à l'intérieur.

De la même façon, il est possible d'imaginer de superposer les conduites principales d'injection C et C' en adaptant la forme des ramifications provenant de la conduite principale positionnée au-dessus de l'autre, ou tout autre variante de réalisation.

Les figures 14 et 15 décrivent un schéma pour distribuer des fluides secondaires en minimisant la différence des temps de parcours entre le point d'entrée du fluide dans le circuit de distribution jusqu'à son point d'injection dans la chambre d'injection et/ou de soutirage.

Pour une colonne comportant comme sur la figure 13 trois DME disposés les uns à côté des autres, le conduit extérieur 70 dédié au fluide B₁ se prolonge à l'intérieur de la colonne 1 par une partie de conduite 71 par exemple de forme circulaire sur au moins une partie de sa longueur et adoptant la forme de la périphérie du DME, sa longueur étant adaptée pour atteindre et distribuer le fluide B₁ dans toutes les chambres d'injection et/ou de soutirage I1 dédiées au fluide B₁ par l'intermédiaire de ramifications par exemple des morceaux de conduite 71i.

Il en est de même lorsque l'on considère la conduite d'injection et/ou de soutirage du fluide B₂ qui est distribué par l'intermédiaire de la conduite 72 prolongée par le morceau de conduite circulaire 73 lui même ramifié par des morceaux de conduite 73i débouchant dans les différentes chambres d'injection et/ou de soutirage.

Selon certains agencements, à la place de deux demi-circuits d'injection et/ou de soutirage, on dispose deux circuits circulaires, par exemple l'un au dessus de l'autre.

Sur les figures 14 et 15, les deux conduits d'injection et/ou de soutirage 70, 72 sont représentés sur des parties de la périphérie de la colonne opposées.

Cette disposition offre notamment comme avantage de simplifier considérablement l'arrangement des conduits internes de connexion aux DME, tout en laissant le maximum de place pour les lits de tamis ou solides granulaires situés de part et d'autre du DME et tout en perturbant au minimum la circulation du fluide principal A₁ à travers ces lits.

Les différentes conduites principales circulaires disposées à l'intérieur de la colonne peuvent avoir une longueur correspondant à une partie ou sensiblement être égale à la circonférence de cette colonne. Elles peuvent aussi être disposées les unes au-dessus des autres.

Le nombre des conduites communes transversales, rectilignes ou non est choisi en fonction, par exemple du nombre de DME positionnés à l'intérieur de la colonne et du nombre de fluides secondaires que l'on souhaite indépendant.

Du fait de l'indépendance des circuits d'injection et/ou de soutirage des fluides secondaires, la disposition de la ou des conduites d'injection et/ou de soutirage commune aux ramifications peut être de forme quelconque sans nécessité aucune symétrie de forme ou de temps de séjour.

Les figures 16, 17 et 18 montrent des exemples d'agencement particulièrement bien adaptés à des colonnes de grand diamètre ou de grande section, qui consistent à disposer des moyens de supportage ou moyens dont la fonction est d'assurer le transport des DME pour améliorer la tenue mécanique de l'ensemble.

Les figures 16 et 17 montrent une colonne munie d'un ensemble mécanique permettant de supporter les DME. L'ensemble se présente, par exemple, sous la forme d'une poutre Pc disposée, de préférence, selon l'axe longitudinal A de la colonne 1, ou poutre centrale, ayant une longueur sensiblement identique à la longueur de la colonne. La section de la poutre peut être quelconque, mais suffisante pour obtenir l'amélioration de la tenue mécanique de l'ensemble.

Sur la figure 18, on a schématisé l'agencement de plusieurs poutres Pc distribuées dans la colonne, selon l'axe longitudinal.

Une ou plusieurs poutres principales Pp sont disposées de façon à être solidaires de la poutre centrale ou tube central de la figure 16 ou aux différentes poutres Pc réparties sur une section de la colonne par exemple selon le schéma de la figure 18. Les poutres sont, par exemple, noyées dans les lits de solides granulaires. Un tel agencement permet notamment de diminuer les risques de flexion des poutres principales, par exemple et leur taille.

Les DME reposent sur les poutres principales et sont ainsi supportées par ces dernières.

Sur la figure 17, on a représenté un moyen de support circulaire disposé à proximité et selon la circonférence de la paroi de la colonne, recevant par exemple les parois des DME les plus proches de la paroi extérieure de la colonne.

Avantageusement, les DME sont disposés les uns par rapport aux autres de façon à réaliser une étanchéité optimale de l'ensemble pour obliger le fluide en écoulement à passer essentiellement à travers l'espace de collecte et à travers la chambre de mélange du DME.

Pour cela, on dispose ou on assemble les DME selon une section de colonne les uns à côté des autres, en les faisant reposer, par exemple, sur l'anneau ou support circulaire disposé au niveau d'une section de la colonne, le tube central Pc et les poutres principales support P distribués au niveau d'une section de la colonne lorsqu'elles existent.

L'intervalle séparant deux DME voisins est par exemple d'environ 10 à 20mm.

Pour réaliser l'étanchéité entre les parois externes de deux DME voisins, et/ou entre la paroi interne de la colonne et les DME disposés au voisinage de cette paroi, on remplit l'intervalle existant par des moyens d'étanchéité, par exemple une tresse d'étanchéité Te dont la taille est choisie suffisante pour obtenir une étanchéité sensiblement totale. On peut aussi disposer plusieurs tresses disposées les unes au-dessus des autres de manière à rendre étanche l'ensemble (figure. 19).

On obtient ainsi une meilleure efficacité du DME, la totalité ou la majorité du fluide passant entièrement ou sensiblement en totalité par au moins une de chambre de mélange d'un des DME disposés selon la section de la colonne.

L'étanchéité ainsi obtenue maintient de plus l'intégrité du lit de tamis tel qu'il a été chargé initialement, ce qui contribue à améliorer la stabilité structurelle du tamis dans le temps.

En effet, lorsque l'étanchéité n'est pas réalisée, le tamis ou les particules formant le lit disposé au-dessus d'un DME peuvent s'écouler à travers l'espace séparant deux DME. Au niveau de l'écoulement du lit, il se crée alors une cavité qui peut se propager et provoquer un écoulement successif du tamis situé au-dessus de la cavité en créant une sorte de cheminée dans laquelle le chargement du lit n'est plus aussi dense, le lit est "détassé", contrairement au reste du lit qui conserve sa forme de charge dense. Si l'étanchéité n'est pas réalisée, cet écoulement peut se propager de lit en lit. Il en résulte un passage préférentiel pour le fluide qui circule, ce qui est préjudiciable à l'efficacité du procédé qui vise à obtenir un écoulement sensiblement uniforme dans tout et sur toute la section d'un lit, de type piston, par exemple.

Le nombre de DME disposés sur une section de colonne, n'est pas limité.

Selon un mode préféré de l'invention, le DME a une forme rectangulaire, avec une largeur qui varie par exemple de 600 et 1200 mm de façon à pouvoir les agencer facilement à l'intérieur de la colonne, et de préférence entre 900 et 1100 mm. Les DME disposés à proximité des parois de la colonne ont au moins une paroi dont la forme est adaptée à celle de la colonne.

En choisissant une forme de DME rectangulaire, le nombre de DME par section de colonne est par exemple de quatorze DME pour une colonne ayant un diamètre de l'ordre de 7,5 m, vingt DME pour un diamètre d'environ 10 m et dix DME pour un diamètre de l'ordre de 5 m.

Lors des arrêts des opérations d'injection et/ou de soutirage des fluides secondaires, il peut se produire un phénomène de pleurage résultant d'un effet dynamique de la circulation du fluide principal A₁ devant les orifices. Ce phénomène se produit notamment au niveau des orifices calibrés qui se trouvent en relation avec le circuit du fluide secondaire concerné par cet arrêt.

Par exemple, lorsque l'on interrompt la circulation de fluide dans la chambre 5, cette dernière se trouve remplie en totalité par exemple du fluide secondaire B₁.

Pour sa part, le fluide principal A₁ continue à circuler à grande vitesse dans la chambre de mélange 7 et passe notamment devant les orifices calibrés faisant communiquer la chambre de mélange et la chambre d'injection et/ou de soutirage. Du fait de l'existence des turbulences du fluide A₁ dans la chambre de mélange, il peut y avoir un phénomène de pleurage, c'est-à-dire qu'une très faible partie du fluide principal va entrer dans la chambre d'injection et/ou de soutirage par l'intermédiaire des orifices calibrés, et inversement une très faible partie du fluide secondaire présent dans la chambre d'injection et/ou de soutirage, va s'échapper de cette chambre vers la chambre de mélange.

Lorsque les fluides principal et secondaire ont des natures différentes, il en résulte une possibilité de contamination réciproque, alors même qu'il n'y a pas de débit de fluide secondaire B₁.

Pour limiter, voire supprimer ce risque de contamination réciproque, il est possible d'utiliser des dispositifs adaptés ou choisir des agencements spécifiques à l'intérieur du DME.

Une première manière de procéder consiste à minimiser la taille des orifices calibrés situés entre la chambre de mélange et les chambres d'injection et/ou de soutirage, par exemple en les choisissant de préférence inférieurs à 10 mm environ, de préférence à 7 mm, et si possible de préférence inférieurs à 5 mm de façon à minimiser l'importance de ce phénomène de pleurage.

Un des agencements possible consiste , par exemple, à éviter de disposer les orifices d'injection et/ou de soutirage de fluides secondaires en face de l'écoulement du fluide principal dans la chambre de mélange (axe des orifices parallèles à la direction du fluide principal), ou encore à éviter d'utiliser une chambre de mélange dont la forme pourrait créer un effet de tuyère ou de venturi avec ces orifices.

Une disposition particulièrement intéressante, décrite aux figures 20 et 21, consiste à associer à une chambre d'injection et/ou de soutirage 5, 6, une préchambre d'injection et/ou de soutirage 55, 66 positionnée entre la chambre de mélange 7 et la chambre d'injection et/ou de soutirage 5, 6.

Chacune des préchambres d'injection et/ou de soutirage 55, 66 comporte un ou plusieurs orifices calibrés 15A, 16A sensiblement identiques aux orifices calibrés précédemment décrits et permettant le passage des fluides entre une chambre d'injection et/ou de soutirage et une préchambre, en plus des orifices 15, 16 qui permettent la circulation de fluides de la chambre de mélange vers les préchambres. Les orifices 15, 16, 15A, 16A sont par exemple disposés les uns par rapport aux autres selon des axes décalés pour éviter les problèmes de rencontre entre des fluides secondaires ayant des natures différentes, comme il a été évoqué précédemment.

Un tel agencement est particulièrement intéressant car il présente notamment les avantages suivants :
- lors de l'injection d'un fluide secondaire B₁, par exemple, les orifices calibrés de la préchambre permettent d'obtenir une meilleure égalisation de la pression régnant à l'intérieur de la préchambre et donc d'obtenir une meilleure distribution du fluide secondaire B₁ à travers la seconde série d'orifices calibrés 15, 16 permettant le passage du fluide secondaire d'une préchambre vers la chambre de mélange,
- le volume réduit de la préchambre pourvue d'orifices calibrés respectivement 15, 15A, 16, 16A constitue un espace confiné qui limite les phénomènes de pleurage et de contamination réciproque des fluides entre eux, essentiellement à l'intérieur de cette préchambre lorsqu'un arrêt de circulation du fluide secondaire est réalisé. En effet, la paroi commune à la chambre de mélange et à la préchambre, pourvue des orifices calibrés joue le rôle d'obstacle, qui empêche les turbulences créées par le fluide principal de se propager dans la chambre d'injection et/ou de soutirage dédiée à un fluide secondaire.

Pour cette raison, le volume de cette préchambre est de préférence minimisé. La largeur entre parois est par exemple comprise entre 10 et 100 mm, et de préférence est compris entre 15 et 50 mm et encore de préférence choisi entre 20 et 30 mm.
- la préchambre de mélange peut aussi avantageusement être utilisée pour réaliser des opérations de rinçage par injection de fluide secondaire, ou de soutirage de fluide principal.

Par exemple, si le fluide principal B₁ est un produit propre et qu'il existe des risques de phénomène de pleurage, c'est-à-dire des risques de contamination du volume contenu dans la préchambre en injectant un volume de fluide B₁ égal ou supérieur au volume de la préchambre, on pousse le volume contaminé dans la chambre de mélange et on obtient ainsi du fluide propre dans la préchambre.

Inversement, en soutirant un volume réduit d'un fluide secondaire B₂ par exemple d'une quantité au moins égale au volume de la préchambre on réalise un rinçage de la préchambre par le fluide principal A₁.

La figure 22 montre une variante de DME où quatre chambres d'injection et/ou d'extraction et de leurs préchambres associées sont disposées de part et d'autre de l'axe de la colonne.

Les figures 23 et 24 schématisent deux autres modes de réalisation de DME pour lesquels plusieurs chambres d'injection et/ou de soutirage sont associées à une préchambre unique.

Dans ce cas, chacune des chambres d'injection et/ou de soutirage est toujours "dédiée" à un seul fluide mais la préchambre associée peut voir des fluides différents.

Ces modes de réalisation présentent notamment les avantages suivants :
- les risques de phénomène de pleurage sont minimisés par rapport aux agencements comprenant plusieurs préchambres puisque l'on a minimisé le nombre des orifices calibrés,
- on utilise le fluide secondaire propre pour rincer le préchambre commune,
- inversement, lorsque l'on soutire un volume d'un fluide secondaire supérieur ou égal au volume de la préchambre commune on obtient en une seule étape le rinçage de cette préchambre commune par le fluide principal, ce qui peut avantageusement être réalisé lorsque le fluide principal devient propre.

Avantageusement, le DME selon l'invention comporte des moyens de collecte et/ou des moyens de redistribution ayant une forme adaptée pour minimiser les différences de temps de parcours entre les lignes de fluide circulant dans les lits de solides granulaires. Des variantes de réalisation de dispositifs sont décrits à titre d'exemples non limitatifs aux figures 25 à 43.

Par exemple, pour homogénéiser les temps de parcours des lignes du fluide principal circulant dans le premier lit supérieur 2 disposé en amont du DME, l'espace de collecte décrit à la figure 25 a une forme différente de celui de la figure 1.

L'espace de collecte 4 prend une forme délimitée par :
- les parois 4a et 4b formées, par exemple, en partie par la paroi supérieure de la chambre de mélange 7,
- les parois supérieures de la chambre d'injection et/ou de soutirage 5, 6, ces parois 4a et 4b étant séparées par l'ouverture 14,
- la grille 3, et
- les parois de la colonne.

Le fluide principal circule dans le lit de solides granulaires supérieur 2 sous forme par exemple d'un piston de fluide du lit notamment de la forme spécifique de l'espace de collecte, passe à travers la grille de collecte 3 puis parcours l'espace de collecte 4 tout en s'écoulant sur les parois 4a et 4b avant de pénétrer par l'orifice 14 dans la chambre de mélange 7. La forme des parois 4a et 4b est adaptée pour que le temps de parcours des lignes de fluide Fi du fluide principal pris entre son point d'introduction à un niveau de la colonne jusqu'à son entrée dans la chambre de mélange pour l'ouverture 14, soit sensiblement identique pour toutes les lignes de fluides ou pour toutes les particules du fluide à travers le lit et l'espace de collecte, quelque soit leur position radiale d'introduction dans le lit. La chambre de mélange 7 est par exemple disposée sensiblement au centre de la colonne, et l'ouverture 14 située sensiblement selon son axe A. Les deux parois de l'espace de collecte 4a et 4b ont une pente qui est définie pour obtenir le résultat recherché c'est-à-dire minimiser les différences de temps de parcours entre les différentes lignes de flux.

Il est aussi possible d'optimiser la forme de l'espace de collecte pour obtenir une uniformité aussi parfaite que possible, des temps de propagation des différentes lignes de fluides, en tenant compte, par exemple de la nature des solides granulaires composant les lits qui peut avoir une Influence sur la vitesse de propagation des lignes de fluides, du fait des interactions possibles du fluide avec les particules formant le lit de solides granulaires.

En effet, le fluide Fb collecté en bordure du DME et donc vers les parois extérieures de la colonne chemine sous la plus grande longueur de l'espace de collecte avant d'atteindre l'ouverture de la chambre de mélange, cette augmentation du parcours par rapport au fluide central Fc est compensé par la forme par exemple incliné de la paroi 4a dont l'angle d'inclinaison est calculé en fonction, par exemple du débit collecté passant en chaque point de l'espace de collecte.

Le fluide secondaire passe de la chambre d'injection et/ou de soutirage vers, ou de la chambre de mélange par les orifices 15 de manière à se mélanger avec le fluide principal. Le mélange A₂ ainsi formé est ensuite évacué par l'orifice calibré 17 et redistribué par des moyens de collecte, comportant par exemple un espace de collecte 8 et une grille de redistribution 9, vers le second lit de solides granulaires 10.

La forme avantageuse de l'espace de collecte en minimisant les différences de temps de parcours entre les différentes lignes de fluides évite des effets de traînées pour le front de propagation du fluide principal. Cet effet de traînée ou retard d'une ligne de fluide par rapport à une autre est particulièrement préjudiciable à la qualité de la séparation chromatographique obtenue à travers le lit de solides granulaires et équivaut à un phénomène de rétromélange.

L'espace de collecte a par exemple une forme conique, mais peut aussi prendre toute forme adaptée pour homogénéiser les temps de parcours des lignes du fluide à compter de son niveau N d'injection dans la colonne jusqu'au moment où il pénètre dans la chambre de mélange.

La figure 26 décrit un autre mode de réalisation où la forme de la grille de collecte est également adaptée pour diminuer les différences de temps de parcours. On adapte la longueur du premier lit, par exemple, parcourue par les lignes de fluides Fi et placé en amont du DME de manière à obtenir un temps de trajet ou un temps de parcours cumulé tenant compte du lit granulaire et de l'espace de collecte lorsqu'il existe, sensiblement égal pour toutes les particules du fluide principal.

Sur la figure 26, la grille 3 a par exemple, une forme de section conique ou en cuvette, ou encore elle présente sur au moins une partie de sa longueur des formes assimilables à des plans inclinés ou à tout autre forme susceptible d'allonger la longueur du lit dans sa partie centrale et d'adapter aussi la longueur de trajet des lignes de fluide en fonction de leur chemin de circulation à l'intérieur de la colonne. On associe par exemple, une longueur supplémentaire de parcours Li à chacune des lignes de fluide Fi en position centrale dans cet exemple de réalisation. La longueur supplémentaire Li du lit décroît par exemple du centre de la colonne vers les parois de la colonne.

La figure 27 décrit un autre mode de réalisation où les formes de la grille 3 et de l'espace 4 de collecte se combinent pour obtenir un temps de parcours sensiblement identique pour toutes les lignes de fluide Fi quelque soit la position de leur trajet dans la colonne. On adapte par exemple la longueur du premier lit parcouru par les lignes de fluides Fi et placé en amont du DME de manière à obtenir un temps de trajet ou un temps de parcours cumulé tenant compte du lit granulaire et de l'espace de collecte lorsqu'il existe, sensiblement égal pour toutes les particules du fluide principal.

Sur la figure 27, la grille 3 a par exemple une forme de section conique, ou en cuvette, ou encore elle présente sur au moins une partie de sa longueur des formes assimilables à des plans inclinés ou à tout autre forme susceptible d'allonger la longueur du lit dans sa partie centrale pour adapter la longueur de trajet des lignes de fluide en fonction de l'endroit où elles circulent à l'intérieur de la colonne. On associe de cette façon une longueur supplémentaire de parcours Li à chacune des lignes de fluide Fi par exemple, dans cet exemple de réalisation, la longueur supplémentaire Li du lit va en décroissant du centre de la colonne vers ses bords.

De plus, afin de diminuer les temps de séjour du fluide principal dans l'espace de collecte, la hauteur h de cet espace est, de préférence choisie pour aller en décroissant à partir du centre du DME vers les bords du DME, ce qui permet de diminuer les volumes morts et les temps de parcours.

La hauteur h est par exemple choisie entre 5 et 50 mm et de préférence entre 5 et 30 mm, pour un espace ayant une forme conique ou en cuvette ou ayant des parois inclinées.

Dans certains cas, la forme de grille peut se suffire à elle-même.

On obtient ainsi une correction quasi parfaite des temps de trajet des différentes particules ou lignes de fluide circulant à travers le lit supérieur 2 avant de pénétrer dans la chambre de mélange.

Dans tous les modes de réalisation citées ci-dessus, l'espace de collecte peut être de hauteur h sensiblement constante.

Les figures 28 et 29 schématisent des exemples d'agencement de l'espace de collecte, combinant des moyens de séparation des lignes de fluides en plusieurs sous-écoulements avec des formes spécifiques de la ou des parois 4a' et 4b' de l'espace de collecte 4.

Par exemple, la disposition de la figure 28 consiste à insérer au niveau de l'espace de collecte 4 une plaque 81 pourvue par exemple d'au moins deux orifices 82 et 83, la plaque étant disposée de manière sensiblement centrale au DME et les orifices 82 et 83 étant situés sensiblement à égal distance de l'axe de la colonne qui correspond à l'axe du DME.

De cette façon, on réalise une première collecte des lignes du fluide principal qui a pour fonction de diminuer les différences de temps de parcours. En effet, les lignes de fluide Fb circulant vers le bord du DME et les lignes de fluide Fc circulant vers l'axe central du DME s'écoulent tangentiellement sur la plaque 81 à partir du centre de la colonne ou d'une de ses parois en parcourant une distance sensiblement identique mais réduite de moitié, avant de passer à travers les orifices 82 ou 83 et avant de déboucher dans un sous espace de collecte 4' délimité par la plaque 81 et les parois 4'a et 4'b formées au moins en partie par les parois supérieures de la chambre de mélange 7 et celles des chambres d'injection et/ou de soutirage 5, 6, avant de pénétrer dans la chambre de mélange 7 par l'orifice 14. Les orifices 82 et 83 sont dans cet exemple de réalisation positionnés sensiblement au 1/4 et au 3/4 de la plaque pris selon la largeur du DME.

La combinaison de la plaque 81 et de la collecte par les deux ouvertures 82, 83 permet de minimiser sensiblement de moitié les différences de temps de parcours entre les lignes de fluide par rapport à une collecte non équipée de ce dispositif.

Une autre manière de procéder décrite à la figure 29 consiste à positionner au niveau de l'espace de collecte 4, une plaque comportant quatre portions ou surfaces inclinées 91a, 91b, 91c et 91d. Les surfaces inclinées 91a et 91b forment un premier espace de collecte 92 par exemple conique ou en cuvette ayant au moins une ouverture de passage 93 et les surfaces inclinées 91c et 91d forment un second espace 92' de collecte, ayant au moins une ouverture de passage 94. Les ouvertures 93 et 94 communiquent avec un espace 4' délimité par les parois 4'a et 4'b prolongeant les surfaces inclinées 91a et 91d.

Les lignes du fluide principal circulent le long des surfaces inclinées dont l'angle d'inclinaison est choisi de façon à homogénéiser, au moins dans une première étape, les temps de parcours des différentes lignes de fluides avant leur passage par les orifices 93 et 94, l'étape finale de minimisation étant effectuée grâce à la forme des parois 4'a et 4'b.

Selon une réalisation avantageuse du dispositif selon l'invention, le DME comporte aussi un espace 8 permettant de redistribuer le mélange issu de la chambre de mélange 7 par l'ouverture 17, dont la forme est adaptée, de préférence pour que toutes les lignes de fluide le constituant ou les particules atteignent le lit 10 situé en aval du DME à peu près en même temps. Le temps de parcours des lignes de fluide entre le point correspondant à l'ouverture 17 jusqu'à la grille de collecte 9 est sensiblement identique.

Cet espace de redistribution présente par exemple des caractéristiques au moins sensiblement identiques à un des modes de réalisation décrit aux figures 25, 26, 27, 28 et 29 pour l'espace de collecte.

L'espace de redistribution a par exemple, une forme ou une géométrie conçue de manière sensiblement identique à l'espace de collecte pour minimiser les volumes morts et les turbulences. Il a par exemple une hauteur variant entre 5 et 50 mm, de préférence entre 5 et 30 mm et de préférence entre 15 et 20 mm et peut avoir n'importe quelle forme, par exemple rectangulaire ou conique.

Sa hauteur peut être sensiblement constante ou encore diminuer par exemple, en partant du centre du DME et en allant vers ses bords, ce qui permet de minimiser les volumes morts et les temps de parcours.

Sur la figure 30, les moyens de redistribution du mélange comportent un espace de redistribution 8 délimité, par exemple par deux parois inclinées 8a et 8b qui sont par exemple formées par une partie de la chambre de mélange 7 et les parois des chambres d'injection et/ou de soutirage 5, 6, et la grille de collecte 9 positionnée juste au dessus du second lit 10, ou encore le second lit lorsque la grille de collecte est absente du dispositif.

La forme de l'espace de redistribution est définie par exemple de manière sensiblement identique à celle de l'espace de collecte précédemment mentionné à la figure 25.

L'espace de redistribution est, de préférence conçu pour minimiser les volumes morts et les turbulences. Il a par exemple une hauteur variant entre 5 et 50 mm, de préférence entre 5 et 30 mm et peut avoir n'importe quelle forme, par exemple rectangulaire ou conique.

Les figures 31 et 32 proposent deux exemples de réalisation pour lesquels les formes de la grille de redistribution 9 et la forme de l'espace de redistribution 8 coopèrent pour obtenir une diminution des écarts de temps de parcours des lignes de fluides issus de la chambre de mélange jusqu'à leur introduction dans le second lit.

L'espace de redistribution de la figure 9 montre un espace de redistribution dont la hauteur h est sensiblement constante.

La figure 32 montre un exemple de réalisation pour lequel, la hauteur h de l'espace de redistribution diminue en partant du centre du DME et en allant vers ses bords, ce qui permet de minimiser les volumes morts et les temps de parcours.

Les figures 33 et 34 montrent des agencements spécifiques pour l'espace de redistribution sensiblement identiques aux agencements des espaces de collecte des figures 28 et 29.

Les figures 35, 36, 37 et 38 schématisent des variantes de réalisation des DME décrits aux figures 4, 7, 10 et 11 et où la différence se situe notamment au niveau des formes et les géométries des espaces de collecte et de redistribution qui sont adaptés pour minimiser les différences de temps de parcours entre les lignes de fluide avant leur entrée dans la chambre de mélange et les lignes de fluide issus de cette chambre de mélange qui. vont continuer leur écoulement dans le second lit de solides granulaires disposés en aval du DME.

Il est bien entendu que dans le cas de colonnes présentant des sections importantes, la distribution et la forme des DME peut être choisie selon un des modes décrits dans la demande WO-95/03867.

Les chambres de mélange peuvent prendre des formes sensiblement allongées, généralement rectilignes, courbées où brisées sur au moins une de leur partie schématisés par exemple sur les figures 44 et 45.

Les figures 46, 47, 48, 49, 50 décrivent en détail cinq exemples de formes spécifiques pour les chambres de mélange. Dans tous ces exemples, le choix de la forme a pour but notamment d'optimiser la fonction de mélange de la chambre.

Sur la figure 46, la chambre de mélange 7 possède avec la première chambre d'injection et/ou de soutirage 5 une première paroi commune comprenant par exemple les parties (5a, 5b, 5c, 5d, et 5e) et avec la deuxième chambre d'injection et/ou de soutirage 6, une deuxième paroi commune composée par exemple de cinq parties (6a, 6b, 6c, 6d et 6e).

La chambre de mélange 7 possède une paroi supérieure et une paroi inférieure qui se situent, par exemple, respectivement dans le prolongement des parois supérieures 12, 13 et des parois inférieures des chambres d'injection et/ou de soutirage 5, 6 qui délimitent respectivement, avec la grille de collecte 3, les parois extérieures de la colonne, et l'espace de collecte 4 alors que la paroi inférieure délimite avec la grille de redistribution 9 les parois extérieures de la colonne, l'espace de redistribution 8. La paroi supérieure de la chambre 7 est pourvue d'un ou de plusieurs orifices Op permettant le passage du fluide principal circulant en aval du DME à travers par exemple le lit de solides granulaires principal et sa paroi inférieure comporte un ou plusieurs orifices Om permettant la sortie du mélange ou du remélange du fluide réalisé à l'intérieur de cette chambre 7, vers l'espace de redistribution.

Les parois communes à chacune des chambres d'injection et/ou de soutirage 5, 6 et à la chambre de mélange 7 sont pourvues d'un ou plusieurs orifices Oi, (l'indice i correspondant par exemple au numéro du fluide secondaire, laissant passer les fluides, par exemple le fluide principal et/ou les différents fluides secondaires B₁, B₂ entre une chambre d'injection et/ou de soutirage et la chambre de mélange.

Ainsi, par exemple, la partie 5 comporte un orifice ou une série d'orifices Oi dont l'axe est orienté de façon telle qu'un premier fluide secondaire B₁, par exemple, issu de la chambre d'injection et/ou de soutirage 5, vienne frapper une partie pleine 6 de la paroi commune à la chambre de mélange 7 et à la seconde chambre d'injection et/ou de soutirage 6, cette paroi (par exemple 6a, 6b) étant située, par exemple, en face, sensiblement dans l'axe d'orientation de l'orifice.

La paroi commune à la chambre de mélange 7 et à la seconde chambre d'injection et/ou de soutirage 6 possède de manière identique, par exemple disposée sur une partie pleine 6c, un ou plusieurs orifices 02 dont l'axe est orienté pour que le deuxième fluide secondaire provenant de la deuxième chambre d'injection et/ou de soutirage vienne frapper par exemple la paroi pleine 5e de la paroi commune à la chambre de mélange et à la première chambre d'injection et/ou de soutirage.

Le fluide ayant frappé la paroi se disperse ensuite dans le fluide principal ou dans le fluide circulant dans la chambre de mélange. En procédant ainsi, on optimise le mélange des fluides à l'intérieur de la chambre.

La forme des parois communes à une chambre d'injection et/ou de soutirage et à la chambre de mélange est choisie de manière à définir pour le fluide ou le mélange circulant dans la chambre un trajet particulier, qui va favoriser son mélange tout le long de son parcours.

Ainsi, le fluide principal injecté par l'ouverture Op circule dans une première zone Z1 de la chambre délimitée par les parois sensiblement parallèles 6a, 5a et la paroi 5b prolongeant la paroi 5a en faisant un angle voisin de 90°C pour rétrécir la zone d'écoulement du fluide principal afin de le canaliser entre les deux parois sensiblement parallèles 5c et 6a. Le premier fluide principal B₁, introduit par le conduit 12 passe dans la première chambre d'injection et/ou de soutirage 5 pour être ensuite injecté vers la chambre de mélange 7, par exemple à travers les orifices O1 disposés sur la partie 5c de la première paroi commune. L'orientation du ou des orifices O1 permet d'injecter ce premier fluide secondaire B₁ dans une direction sensiblement perpendiculaire à la direction d'écoulement du fluide principal, et aussi de façon à ce qu'il aille frapper une partie pleine de la seconde paroi commune, se trouvant en face de la première paroi. Après avoir frappé la seconde paroi pleine le fluide passant par l'orifice, se disperse dans le fluide circulant dans la chambre. Sa dispersion peut engendrer des phénomènes de turbulence au sein de la chambre permettant d'optimiser son mélange avec le fluide principal et/ou les fluides présents dans la chambre de mélange. La forme de la chambre de mélange délimitée au moins par les parois 5d, 5e, 5f et 6b, 6c, 6d, 6f et par les parois inférieures 7i et supérieures 7s est avantageusement choisie pour améliorer le mélange ainsi réalisé.

L'injection d'un second fluide secondaire à l'intérieur de la chambre est par exemple effectuée en séquence avec l'injection du premier fluide mais selon un principe sensiblement identique.

Ainsi, de manière sensiblement similaire, le fluide principal circulant selon un chemin similaire au chemin mentionné ci-dessus, on introduit le second fluide secondaire dans la seconde chambre d'injection et/ou de soutirage 6 par le conduit 13 qui pénètre par exemple par un ou plusieurs orifices 02 disposés sur la partie 6c de la seconde paroi commune dans la chambre de mélange. Ce second fluide percute par exemple la partie pleine 5e de la première paroi commune, avant de se disperser au sein du fluide circulant dans la chambre.

Le mélange A₂ résultant du fluide principal et d'au moins un des fluides secondaires B₁, B₂ sort de la chambre de mélange par l'orifice Om, avant d'être distribué à travers l'espace de redistribution 8 et de la grille de distribution 9 ou de redistribution dans le second lit de solides granulaires disposé en aval du DME.

Les parties 5i (5a, 5b...) et 6i (6a, 6b...), communes aux chambres sont reliées entre elles et se prolongent, pour former avec les parois inférieure et supérieure de la chambre de mélange, un espace ou forme de mélange dont la forme est optimisée pour mélanger plusieurs fluides ou remélanger un fluide.

L'orientation des axes des orifices pour injecter et/ou soutirer le fluide dans la chambre de mélange ou à partir de cette chambre est choisi pour avantageusement éviter le passage de fluides secondaires à travers des orifices communiquant avec des chambres qui ne leur sont pas dédiées. On évite ainsi tout problème de pollution des circuits d'injection et/ou de soutirage (chambre et conduit associé) provenant de l'utilisation de fluides secondaires ayant des natures différentes, contrairement au cas où l'on utilise un seul circuit d'injection et/ou de soutirage commun aux différents fluides.

Les orifices d'entrée Oₚ de la chambre de mélange 7 sont, par exemple, des séries de trous calibrés ou de fentes calibrées, de préférence, régulièrement espacées pour réaliser une collecte aussi uniforme que possible du fluide principal A₁ vers la chambre de mélange 7.

La dimension et la géométrie de ces orifices sont choisies pour que le fluide à l'entrée de la chambre de mélange ait une vitesse favorable pour créer des turbulences à l'intérieur et en même temps pour générer une perte de charge permettant de confiner ces turbulences à l'intérieur de la chambre de mélange.

Ainsi, l'espacement entre les orifices d'entrée Oₚ du fluide A1 est, par exemple, compris entre 30 et 150 mm et de préférence entre 50 et 100 mm. La vitesse du fluide à travers les orifices obtenus avec un tel espacement varie par exemple entre 1 et 5 m/s, de préférence entre 2 et 3 m/s. La perte de charge ainsi générée en sortie des orifices est comprise entre 10 et 100 g/cm² et de préférence entre 30 et 60 g/cm².

Les voies de sortie Om d'un fluide de la chambre de mélange sont par exemple formées par une série de trous ou de fentes, de préférence, régulièrement espacés de façon à redistribuer le fluide provenant de la chambre de mélange de manière la plus uniforme possible vers l'espace de redistribution 8. Ce fluide résulte du mélange d'au moins un fluide principal à au moins un fluide secondaire.

De cette manière, on optimise la collecte et la bonne distribution du fluide provenant de la chambre de mélange et passant dans l'espace de redistribution 8 et ensuite à travers la grille 9 lorsque cette dernière est présente.

Les orifices d'introduction Oₚ et de sortie Oₘ situés au niveau de la chambre de mélange 7 sont, de préférence, disposés en alternance ou encore en quinconce pour favoriser la dispersion transversale du fluide principal A₁ et des fluides secondaires B₁, B₂ mélangés ensemble. Ces orifices sont disposés de préférence de la manière la plus uniforme possible avec, par exemple, le même pas ou espacement entre eux.

De même la disposition de ces orifices est choisie pour éviter les effets de tuyère ou de venturi dans la chambre résultant par exemple de la circulation à grande vitesse du fluide dans la chambre de mélange.

Les orifices O₁, O₂ d'introduction ou de soutirage des fluides secondaires B₁, B₂ sont, par exemple formés par une série de trous, de préférence, régulièrement espacés pour injecter et/ou soutirer ces fluides secondaires de façon la plus uniforme possible vers et/ou de la chambre de mélange M. Ces orifices sont de préférence calibrés et dimensionnés, par exemple, pour que la vitesse linéaire du fluide injecté à l'entrée de la chambre de mélange soit suffisamment importante pour favoriser la création de turbulences à l'intérieur de la chambre de mélange et pour obtenir une perte de charge significative.

La vitesse du fluide à travers les orifices de passage O₁, O₂ est, par exemple, comprise entre 1 et 15 m/s, de préférence entre 5 et 10 m/s. L'espacement entre les trous est choisi, par exemple entre 30 et 150 mm et de préférence entre 50 et 100 mm. La perte de charge correspondante varie entre 100 et 2000 g/cm² et de préférence entre 200 et 1000 g/cm².

Les orifices ou la série d'orifices O₁, O₂ d'injection et/ou de soutirage sont par exemple, de préférence, disposés par rapport aux orifices d'entrée Oₚ pour que le fluide injecté par un de ces orifices se mélange au fluide principal circulant dans la chambre de mélange, puis se redistribue en deux au travers des orifices de sortie Om disposés par exemple en alternance ou encore en quinconce par rapport aux orifices Oₚ, O₁ et O₂.

La géométrie et les dimensions des chambres d'injection et/ou de soutirage 5, 6 sont choisies pour assurer un débit des fluides sensiblement identique à travers tous les orifices de sortie. Par exemple, le rapport de la longueur développée desdites chambres à leur largeur moyenne ou équivalente est inférieur à 30 et de préférence inférieur à 20, et de préférence inférieur à 10.

De plus les dimensions de ces chambres sont adaptées pour permettre au fluide secondaire d'aller s'écraser sur une partie pleine d'une paroi pour favoriser une dispersion au sein d'un fluide circulant dans la chambre, et son mélange avec le fluide.

Selon un autre mode de réalisation décrit à la figure 47, la paroi supérieure 7s de la chambre de mélange est pourvue, par exemple d'au moins deux séries d'orifices Oₚ, O_{p'} distribués par exemple selon sensiblement toute la longueur de la chambre de mélange et présentant des caractéristiques sensiblement identiques à celles des orifices donnés ci-dessus.

Dans cet exemple de réalisation, la chambre de mélange 7 est sensiblement symétrique par rapport à l'axe central du DME et elle est formée par exemple par deux parois comportant respectivement les parties 6a, 5a s'étendant sensiblement selon l'axe du DME et prolongés par les parois 6b, 5b de façon à rétrécir la largeur de la première zone Z₁ de la chambre de mélange M. Les parois 6b, 5b sont elles-mêmes respectivement prolongées par des parois 6c 5c selon une direction sensiblement parallèle à l'axe longitudinal du DME et définissant ainsi une seconde zone Z₂ ayant par exemple la forme d'un canal. La zone Z₂ est elle-même prolongée par une zone Z₃ délimitée par les parois 6d, 5d prolongées par les parois 6e, 5e. Les angles entre deux parois successives sont sensiblement égaux, par exemple, à 90°.

L'ensemble de ces trois zones de mélange Z₁, Z₂ et Z₃ forment un espace ou chambre de mélange, ayant une dimension et une forme permettant d'optimiser le mélange de plusieurs fluides ou le remélange d'un fluide à l'intérieur de la chambre.

Les parois 6c et 5c sont pourvues d'une ou plusieurs séries d'orifices O₁, O₂ permettent le passage des fluides entre la chambre de mélange et les chambres d'injection et/ou de soutirage.

Les orifices de passage des différents fluides, du fluide principal, des fluides secondaires, et du mélange de plusieurs fluides secondaires avec le fluide principal ou encore du fluide remélangé à l'intérieur de la chambre lorsqu'aucun autre fluide secondaire n'est injecté dans le DME, présentent des caractéristiques sensiblement identiques aux caractéristiques prises par les orifices décrits ci-dessus, par exemple, en relation avec la figure 1.

Au moins une des zones Z₁, Z₂ et Z₃ peut être équipée de moyens promoteurs de turbulences.

La figure 48 schématise une variante de réalisation du dispositif selon l'invention équipée de moyens tel qu'un brise-jet B disposé au niveau de l'espace de redistribution 8, de préférence, par exemple en face du ou des orifices de sortie Oₘ. La forme et la dimension du brise-jet sera adapté au nombre et à la distribution des orifices de sortie Oₘ répartis sur la paroi inférieure de la chambre de mélange 7.

Un tel agencement permet d'éviter au fluide d'aller percuter directement le lit de solides granulaires 10 disposé en aval du DME.

De plus, on améliore aussi la distribution radiale du fluide issu de la chambre de mélange dans l'espace de redistribution 8.

Sans sortir du cadre de l'invention, le brise jet ou tout moyen ayant une fonction identique est disposé, par exemple au niveau de l'espace de collecte sensiblement dans l'axe du ou des orifices d'introduction du fluide, de préférence en face de l'orifice d'introduction ce qui a notamment pour effet de répartir la distribution du fluide provenant de la grille de collecte au sein de l'espace de collecte. On évite ainsi les phénomènes de turbulence prononcés au voisinage du premier lit de solides granulaires et on favorise la collecte du fluide principal.

Une autre variante de réalisation du dispositif permettant d'obtenir un effet similaire est schématisé sur les figures 49 et 50.

Sur la figure 49 les première et seconde parois communes à la chambre de mélange 7 et aux chambres d'injection et/ou de soutirage 5, 6, se prolongent au moins sur une partie de leur hauteur dans l'espace de redistribution 8.

Les orifices ou séries d'orifices O₁ₘ₁ et Oₘ₂ sont dans cet exemple de réalisation positionnés sur chacune des prolongations des première et seconde parois communes, de part et d'autre, par exemple.

De cette façon le fluide ou mélange issu de la chambre de mélange est réparti en deux flux avant d'être distribué dans l'espace de redistribution, ce qui permet de mieux répartie la distribution de ce fluide avant son passage à travers la grille de redistribution et son introduction dans le lit situé en aval du DME.

Sur la figure 50 la partie des parois communes se prolongeant à l'intérieur de l'espace de redistribution est inclinée par rapport à l'axe du DME.

Sans sortir du cadre de l'invention, il est bien entendu que le prolongement des parois communes de la chambre de mélange peut être réalisé à l'intérieur de l'espace de collecte.

Ces parois comportent alors des orifices d'introduction présentant des caractéristiques sensiblement identiques à celles décrites pour les orifices Oₘ₁ et Oₘ₂. De même la forme de ces parois ainsi que leur position par rapport à l'axe du DME par exemple, respectent des critères sensiblement identiques aux critères décrits sur la figure 50, par exemple.

## Revendications

1. Dispositif DME permettant de distribuer, de mélanger, d'injecter et/ou de soutirer plusieurs fluides, un des fluides étant un fluide principal A₁, et au moins, un premier fluide secondaire B₁ et un second fluide secondaire B₂, ledit dispositif comportant des moyens de collecte (3, 4) dudit fluide principal A₁, lesdits moyens de collecte étant en relation avec au moins une chambre de mélange (7), au moins un premier circuit (12, 5) d'injection et/ou de soutirage d'un premier fluide secondaire B₁, et au moins un second circuit (13,6) d'injection et/ou de soutirage d'un second fluide secondaire B₂, lesdits circuits d'injection et/ou de soutirage étant en communication avec la chambre de mélange (7) à l'aide d'une ou plusieurs ouvertures (15, 16) permettant le passage desdits fluides secondaires (B₁, B₂) dans ou de ladite chambre de mélange (7), ladite chambre de mélange (7) comportant au moins un orifice d'introduction du fluide principal (14) et au moins un orifice de sortie (17), des moyens de redistribution (8,9) du fluide issu de la chambre de mélange, **caractérisé en ce que** lesdits circuits d'injection et/ou d'extraction sont distincts et disposés à proximité de ladite chambre de mélange et séparés par une des parois de ladite chambre, ladite paroi est plane et a une direction sensiblement parallèle à l'axe du DME.

2. Dispositif selon la revendication 1 **caractérisé en ce que** lesdits circuits distincts d'injection et/ou de soutirage sont disposés d'un même côté de ladite chambre de mélange.

3. Dispositif selon la revendication 1 **caractérisé en ce que** lesdits circuits d'injection et/ou de soutirage sont séparés par une ou plusieurs des parois de la chambre de mélange.

4. Dispositif selon l'une des revendications de 1 à 3 **caractérisé en ce que** le nombre de circuits d'injection et/ou de soutirage est au moins supérieur à 4.

5. Dispositif selon l'une des revendications de 1 à 4 **caractérisé en ce qu'**au moins un desdits circuits d'injection et/ou de soutirage est associé à au moins un pré-circuit d'injection et/ou de soutirage.

6. Dispositif selon l'une des revendications de 1 à 5 **caractérisé en ce que** ladite chambre de mélange comporte au moins un moyen tel qu'un baffle équipé d'au moins un orifice laissant passer le fluide, pour sous-diviser ladite chambre en plusieurs sous-chambres de mélange.

7. Dispositif selon l'une des revendications de 1 à 6 **caractérisé en ce que** lesdits circuits d'injection et/ou de soutirage et lesdits pré-circuits d'injection et/ou de soutirage communiquent avec ladite chambre de mélange ou avec les sous-chambres de mélange ou entre eux par un ou plusieurs orifices disposés selon les parois des différentes chambres ou circuits, ou des différents circuits les axes des orifices étant choisis pour être décalés les uns par rapport aux autres.

8. Dispositif selon l'une des revendications précédentes **caractérisé en ce qu'**il comporte des moyens de collecte et/ou des moyens de redistribution dont la forme est adaptée pour minimiser les écarts des temps de parcours des lignes de fluides avant ladite chambre de mélange et/ou après ladite chambre de mélange.

9. Dispositif selon la revendication 8, **caractérisé en ce que** lesdits moyens de collecte comportent une grille de collecte (3) s'étendant sensiblement sur la totalité de la section du DME et/ou un espace de collecte (4), **en ce que** lesdits moyens de redistribution comportent au moins une grille de redistribution (9) s'étendant sensiblement sur toute la section du DME, et **en ce que** les moyens de redistribution comportent au moins une grille de redistribution et/ou un espace de redistribution (8).

10. Dispositif selon l'une des revendications précédentes **caractérisé en ce que** le premier circuit d'injection et/ou de soutirage (5) comporte une ou plusieurs ouvertures (O1) disposées sur la paroi commune audit circuit et à ladite chambre de mélange, le deuxième circuit d'injection et/ou de soutirage (6) comporte une ou plusieurs ouvertures (O2) disposées sur la paroi commune audit deuxième circuit et à ladite chambre de mélange, l'orientation des axes des ouvertures (O₁, O₂) étant choisie pour que le fluide passant à travers ces ouvertures atteigne au moins une partie pleine de la paroi de ladite chambre de mélange.

11. Dispositif selon la revendication 10, **caractérisé en ce que** l'axe desdites ouvertures situées sur la première (respectivement la deuxième paroi commune) est orienté vers une partie pleine de ladite seconde paroi commune de ladite chambre de mélange (respectivement de la première paroi commune).

12. Dispositif selon l'une des revendications précédentes, **caractérisé en ce que** ladite chambre de mélange et/ou de soutirage possède une largeur prise entre deux parois opposées comprise en 10 et 100 mm et de préférence entre 20 et 60 mm et encore de préférence entre 30 et 50 mm.

13. Dispositif selon l'une des revendications précédentes, **caractérisé en ce que** lesdits moyens de collecte et de redistribution comportent respectivement un espace de collecte et un espace de redistribution et **en ce qu'**au moins un dispositif de brise-jet est disposé au niveau d'au moins un de ces espaces.

14. Dispositif selon l'une des revendications précédentes, **caractérisé en ce qu'**il comporte au moins quatre circuits d'injection et/ou de soutirage disposés par rapport à ladite chambre de mélange et/ou de soutirage de façon à avoir au moins une paroi commune et des orifices de communication avec ladite chambre, les axes desdits orifices disposés sur la paroi commune étant orientés pour que le fluide aille frapper une partie pleine d'une autre paroi de ladite chambre de mélange et/ou de soutirage, ladite autre paroi étant une paroi non commune à ladite chambre de mélange et/ou de soutirage.

15. Dispositif selon l'une des revendications précédentes, **caractérisé en ce que** la chambre de mélange et/ou de soutirage comporte des moyens promoteurs de turbulence situés à l'intérieur.

16. Dispositif selon l'une des revendications précédentes, **caractérisé en ce qu'**il a une forme rectangulaire avec une largeur qui varie de 600 mm à 1200 mm.

17. Colonne permettant la séparation d'un corps à partir d'un fluide comportant au moins plusieurs composés séparables, comprenant au moins un premier et un second lit de solides granulaires séparés par au moins un dispositif DME, ledit DME comportant au moins des moyens de collecte (3, 4) dudit corps à séparer, lesdits moyens de collecte étant en relation avec au moins une chambre de mélange (7), au moins un premier circuit (12, 5) d'injection et/ou de soutirage d'un premier fluide secondaire B₁ et au moins un second circuit (13, 6) d'injection et/ou de soutirage d'un second fluide secondaire B₂, lesdits circuits d'injection et/ou de soutirage étant en communication avec ladite chambre de mélange (7) à l'aide d'une ou plusieurs ouvertures (15, 16) permettant le passage desdits fluides secondaires B₁, B₂ dans ladite chambre de mélange, ladite chambre de mélange (7) comportant au moins un orifice d'introduction (14) et un orifice de sortie (17), des moyens de redistribution (8, 9) du fluide issu de la chambre de mélange, **caractérisée en ce que** lesdits circuits d'injection et/ou de soutirage sont distincts et disposés à proximité de ladite chambre de mélange et séparés par une des parois de ladite chambre, ladite paroi est plane et a une direction sensiblement parallèle à l'axe du DME.

18. Colonne selon la revendication 17, **caractérisée en ce qu'**elle comporte au moins un DME comprenant au moins quatre circuits d'injection et/ou de soutirage indépendants séparés par au moins une des parois de ladite chambre de mélange, ladite paroi de la chambre ayant une direction sensiblement parallèle à l'axe de la colonne.

19. Colonne selon la revendication 18, **caractérisée en ce que** ladite chambre de mélange d'un DME comporte au moins un moyen tel qu'un baffle pourvu d'au moins un orifice laissant passer le fluide, pour sous-diviser ladite chambre en plusieurs sous-chambres de mélange.

20. Colonne selon l'une des revendications 17 à 19, **caractérisée en ce que** lesdits moyens de collecte et/ou lesdits moyens de redistribution ont une forme adaptée pour minimiser les différences de temps de parcours des différentes lignes de fluide ayant traversé au moins une partie d'un lit de solides granulaires avant leur entrée dans la chambre de mélange et/ou homogénéiser les temps de parcours des lignes de fluides issus de la chambre de mélange jusqu'à leur entrée dans le second lit disposé en aval du DME.

21. Colonne selon l'une des revendications 17 à 20, **caractérisée en ce qu'**elle comporte plusieurs DME selon l'une des revendications 1 à 16, disposés les uns à côté des autres et répartis selon une ou plusieurs sections de ladite colonne.

22. Colonne selon l'une des revendications 17 et 18, **caractérisée en ce qu'**elle comporte plusieurs DME et des moyens d'étanchéité entre lesdits DME, et les DME et la paroi externe de la colonne, pour que le fluide passe de préférence essentiellement par la chambre de mélange des DME.

23. Colonne selon l'une des revendications 21 et 22, **caractérisée en ce qu'**elle comporte au moins un conduit principal de distribution d'un fluide, de l'extérieur de la colonne vers au moins une chambre d'injection et/ou de soutirage dédiée à un fluide, ledit conduit principal étant relié à au moins une desdites chambres d'injection et/ou de soutirage par l'intermédiaire d'une ramification, ledit conduit principal traversant la paroi extérieure de ladite colonne.

24. Colonne pour séparer au moins un corps à partir d'un fluide comportant au moins plusieurs composés séparables, **caractérisée en ce qu'**elle comprend en combinaison :
• au moins un moyen de « supportage » (Pc) disposé sensiblement le long d'un axe longitudinal de la colonne,
• une ou plusieurs poutres principales (P), la ou lesdites poutres étant reliées au moyen de supportage (Pc),
• plusieurs dispositifs DME selon l'une des revendications 1 à 16, lesdits DME étant disposés pour une même section autour des moyens de supportage et au-dessus de la ou des poutres principales, lesdits DME étant séparés les uns des autres par des moyens d'étanchéité, lesdits DME étant disposés entre un premier et un second lit de solides granulaires et lesdites poutres principales étant noyées dans le second lit de solides granulaires,
• au moins un moyen principal de distribution et/ou de soutirage d'un fluide vers un circuit d'injection et/ou de soutirage.

25. Utilisation d'une colonne selon l'une des revendications 17 à 24 pour réaliser la séparation chromatographique d'un corps.

## Claims

1. DME device permitting distribution, mixing, injection and/or drawing off of a plurality of fluids, one of the fluids being a main fluid A₁, and at least a first secondary fluid B₁ and a second secondary fluid B₂, the said device including collecting means (3, 4) for the said main fluid A₁, the said collecting means being in communication with at least one mixture chamber (7), at least a first circuit (12, 5) for injection and/or drawing off of a first secondary fluid B₁, and at least a second circuit (13, 6) for injection and/or drawing off of a second secondary fluid B₂, the said circuits for injection and/or drawing off being in communication with the mixture chamber(7) by means of one or more openings (15, 16) allowing passage of the said secondary fluids (B₁, B₂) into or from the said mixture chamber (7), the said mixture chamber (7) including at least one orifice for introduction of the main fluid (14) and at least one outlet orifice (17), means for redistribution (8, 9) of the fluid coming from the mixture chamber, ***characterised by** the fact that* the said circuits for injection and/or extraction are separate and arranged in the proximity of the said mixture chamber and separated by one of the walls of the said chamber, the said wall is flat and has a direction substantially parallel with the axis of the DME.

2. Device as described in claim 1, ***characterised by** the fact that* the said separate circuits for injection and/or drawing off are arranged on a same side of the said mixture chamber.

3. Device as described in claim 1, ***characterised by** the fact that* the said circuits for injection and/or drawing off are separated by one or more of the walls of the mixture chamber.

4. Device as described in one of claims 1 to 3, ***characterised by** the fact that* the number of circuits for injection and/or drawing off is at least greater than 4.

5. Device as described in one of claims 1 to 4, ***characterised by** the fact that* at least one of the said circuits for injection and/or drawing off is associated with at least one pre-circuit for injection and/or drawing off.

6. Device as described in one of claims 1 to 5, ***characterised by** the fact* that the said mixture chamber includes at least one means such as a baffle provided with at least one orifice allowing passage of the fluid, to sub-divide the said chamber into a plurality of mixture sub-chambers.

7. Device as described in one of claims 1 to 6, ***characterised by** the fact that* the said circuits for injection and/or drawing off and the said pre-circuits for injection and/or drawing off communicate with the said mixture chamber or with the mixture sub-chambers or between themselves through one or more orifices arranged along the walls of the different chambers or circuits or of the different circuits, the axes of the orifices being selected to be offset one relative to the others.

8. Device as described in one of the preceding claims, ***characterised by** the fact that* it includes collecting means and/or redistribution means the form of which is suitable to minimise the time intervals for passage of fluids through the lines before the said mixture chamber and/or after the said mixture chamber.

9. Device as described in claim 8, ***characterised by** the fact that* the said collecting means include a collecting grid (3) extending substantially over the whole of the section of the DME and/or a collecting space (4), by the fact that the said redistribution means include at least a redistribution grid (9) extending substantially over the whole section of the DME, *and by the fact* that the redistribution means include at least a redistribution grid and/or a redistribution space (8).

10. Device as described in one of the preceding claims, ***characterised by** the fact that* the first circuit for injection and/or drawing off (5) includes one or more openings (O₁) arranged on the wall common to the said circuit and to the said mixture chamber, the second circuit for injection and/or drawing off (6) includes one or more openings (O₂) arranged on the wall common to the said second circuit and to the mixture chamber, the orientation of the axes of the openings (O₁, O₂) being selected so that the fluid passing through these openings reaches at least one solid part of the wall of the said mixture chamber.

11. Device as described in claim 10, ***characterised by** the fact that* the axis of the said openings situated on the first (the second common wall respectively) is oriented towards a solid part of the said second common wall of the said mixture chamber (of the first common wall respectively).

12. Device as described in one of the preceding claims, ***characterised by** the fact that* the said mixture and/or drawing off chamber has a width measured between two opposite walls between 10 and 100 mm and preferably between 20 and 60 mm and more preferably between 30 and 50 mm.

13. Device as described in one of the preceding claims, ***characterised by** the fact that* the said collection and redistribution means respectively include a collection space and a redistribution space and by the fact that at least one jet-breaker device is arranged at the level of at least one of these spaces.

14. Device as described in one of the preceding claims, ***characterised by** the fact that* it includes at least four circuits for injection and/or drawing off arranged relative to the said mixture and/or drawing off chamber so as to have at least one common wall and orifices for communication with the said chamber, the axes of the said orifices arranged on the common wall being oriented so that the fluid goes to strike a solid part of another wall of the said mixture and/or drawing off chamber, the said other wall being a wall not common to the said mixture and/or drawing off chamber.

15. Device as described in one of the preceding claims, ***characterised by** the fact that* the mixture and/or drawing off chamber includes turbulence promoting means situated inside.

16. Device as described in one of the preceding claims, ***characterised by** the fact that* it has a rectangular form with a width which varies from 600 mm to 1200 mm.

17. Column permitting the separation of a body from a fluid including at least a plurality of separable components, comprising at least a first and a second bed of granular solids separated by at least one DME device, the said DME including at least means for collection (3, 4) of the said body to be separated, the said collection means being in communication with at least a mixture chamber (7), at least a first circuit (12, 5) for injection and/or drawing off of a first secondary fluid B₁ and at least a second circuit (13, 6) for injection and/or drawing off of a second secondary fluid B₂, the said circuits for injection and/or drawing off being in communication with the said mixture chamber (7) by means of one or more openings (15, 16) permitting passage of the said secondary fluids B₁, B₂ into the said mixture chamber, the said mixture chamber (7) including at least one introduction orifice (14) and one outlet orifice (17), means for redistribution (8, 9) of the fluid from the mixture chamber, ***characterised by** the fact that* the said circuits for injection and/or drawing off are separate and arranged in the proximity of the said mixture chamber and separated by one of the walls of the said chamber, the said wall is flat and has a direction substantially parallel with the axis of the DME.

18. Column as described in claim 17, ***characterised by** the fact that* it includes at least one DME comprising at least four independent injection and/or drawing off circuits separated by at least one of the walls of the said mixture chamber, the said wall of the chamber having a direction substantially parallel with the axis of the column.

19. Column as described in claim 18, ***characterised by** the fact that* the said mixture chamber of a DME includes at least a means such as a baffle provided with at least one orifice allowing passage of the fluid, to sub-divide the said chamber into a plurality of mixture sub-chambers.

20. Column as described in one of claims 17 to 19, ***characterised by** the fact that* the said collection means and/or the said redistribution means have a form suitable to minimise the time differences for through-passage of the different lines of fluid having passed through at least a part of a bed of granular solids before their entry into the mixture chamber and/or to homogenise the times for through-passage of the lines of fluids from the mixture chamber to their entry into the second bed arranged downstream of the DME.

21. Column as described in one of claims 17 to 20, ***characterised by** the fact that* it includes a plurality of DME as described in one of claims 1 to 16, arranged one beside the other and distributed along one or more sections of the said column.

22. Column as described in one of claims 17 and 18, ***characterised by** the fact that* it includes a plurality of DME and sealing means between the said DME, and the DME and the outer wall of the column, so that the fluid preferably essentially passes through the mixture chambers of the DME.

23. Column as described in one of claims 21 and 22, ***characterised by** the fact that* it includes at least one main fluid distribution conduit, from the outside of the column to at least one injection and/or drawing off chamber dedicated to a fluid, the said main conduit being connected to at least one of the said injection and/or drawing off chambers by means of a branch, the said main conduit passing through the outer wall of the said column.

24. Column for separating at least one body from a fluid including at least a plurality of separable components, ***characterised by** the fact that* it includes in combination:
- at least one "support" means (Pc) arranged substantially along a longitudinal axis of the column,
- one or more main beams (P), the beam or beams being connected to the support means (Pc),
- a plurality of DME devices as described in one of claims 1 to 16, the said DME being arranged for a same section around the support means and above the main beam or beams, the said DME being separated from each other by sealing means, the said DME being arranged between a first and a second bed of granular solids and the said main beams being immersed in the second bed of granular solids,
- at least one main means for distribution and/or drawing off of a fluid to a circuit for injection and/or drawing off.

25. Use of a column as described in one of claims 17 to 24 to effect chromatographic separation of a body.

## Patentansprüche

1. DME-Vorrichtung, die es ermöglicht, mehrere Fluide, wobei eines der Fluide ein Hauptfluid A₁ ist und wenigstens ein sekundäres Fluid B₁ und ein zweites sekundäres Fluid B₂ zu verteilen, zu mischen, einzuspritzen und/oder abzuziehen, wobei die Vorrichtung Mittel zum Sammeln (3, 4) des Hauptfluids A₁ umfasst, wobei diese Mittel zum Sammeln in Bezug zu wenigstens einer Mischkammer (7), wenigstens einem ersten Kreislauf (12, 5) zur Injektion und/oder zum Abziehen eines ersten sekundären Fluids B₁ und wenigstens einem zweiten Kreislauf (13, 6) zur Injektion und/oder zum Abziehen eines zweiten sekundären Fluids B₂ stehen, wobei die Injektions- und/oder Abzugskreisläufe in Kommunikation mit der Mischkammer (7) mit Hilfe von einer oder mehreren Öffnungen (15, 16) stehen, die den Durchgang der Sekundärfluide (B₁, B₂) in die oder von der Mischkammer (7) ermöglichen, wobei die Mischkammer (7) wenigstens eine Öffnung zur Einführung des Hauptfluids (14) und wenigstens eine Öffnung zum Austritt (17) und Mittel zur Verteilung (8, 9) des Fluids aus der Mischkammer umfasst, **dadurch gekennzeichnet, dass** die Kreisläufe zur Injektion und/oder zum Abziehen unterschiedlich und in der Nähe der Mischkammer angeordnet und durch eine der Wände der Kammer getrennt sind, wobei die Wand eben ist und eine im wesentlichen zur Achse des DME parallele Richtung hat.

2. Vorrichtung nach Anspruch 1, **dadurch gekennzeichnet, dass** die unterschiedlichen Kreisläufe zur Injektion und/oder zum Abziehen auf ein und derselben Seite der Mischkammer angeordnet sind.

3. Vorrichtung nach Anspruch 1, **dadurch gekennzeichnet, dass** die Kreisläufe zur Injektion und/oder zum Abziehen durch eine oder mehrere Wände der Mischkammer getrennt sind.

4. Vorrichtung nach einem der Ansprüche 1 bis 3, **dadurch gekennzeichnet, dass** die Anzahl der Kreisläufe zur Injektion und/oder zum Abziehen wenigstens größer als 4 ist.

5. Vorrichtung nach einem der Ansprüche 1 bis 4, **dadurch gekennzeichnet, dass** wenigstens einer der Kreisläufe zur Injektion und/oder zum Abziehen mit wenigstens einem Vorkreislauf zur Injektion und/oder zum Abziehen verbunden ist.

6. Vorrichtung nach einem der Ansprüche 1 bis 5, **dadurch gekennzeichnet, dass** die Mischkammer wenigstens ein Mittel wie ein Baffle umfasst, das mit wenigstens einer Öffnung ausgerüstet ist, die das Fluid passieren lässt, um die Kammer in mehrere Unterkammern zum Mischen zu unterteilen.

7. Vorrichtung nach einem der Ansprüche 1 bis 6, **dadurch gekennzeichnet, dass** die Kreisläufe zur Injektion und/oder zum Abziehen und die Vorkreisläufe zur Injektion und/oder zum Abziehen mit der Mischkammer oder den Unterkammern zum Mischen oder unter sich durch eine oder mehrere Öffnungen kommunizieren, die gemäß den Wänden der verschiedenen Kammern oder Kreisläufe angeordnet sind, oder mit den verschiedenen Kreisläufen kommunizieren, wobei die Achsen der Öffnungen gewählt sind, um zueinander versetzt zu sein.

8. Vorrichtung nach einem der vorhergehenden Ansprüche, **dadurch gekennzeichnet, dass** sie Mittel zum Sammeln und/oder Mittel zur Verteilung umfasst, deren Form ausgelegt ist, um die Umlaufzeitabfälle der Fluidleitungen vor der Mischkammer und/oder nach der Mischkammer zu minimieren.

9. Vorrichtung nach Anspruch 8, **dadurch gekennzeichnet, dass** die Mittel zum Sammeln ein Sammelgitter (3) umfassen, das sich im wesentlichen über die Gesamtheit des Abschnitts der DME und/oder eines Sammelraums (4) erstreckt, dass die Mittel zur Verteilung wenigstens ein Verteilungsgitter (9) umfassen, welche sich im wesentlichen über den gesamten Querschnitt des DME erstreckt, und dadurch, dass die Mittel zur Verteilung wenigstens ein Verteilungsgitter und/oder einen Verteilungsraum (8) umfassen.

10. Vorrichtung nach einem der vorhergehenden Ansprüche, **dadurch gekennzeichnet, dass** der erste Kreislauf zur Injektion und/oder zum Abziehen (5) eine oder mehrere Öffnungen (O1) umfasst, die auf der gemeinsamen Wand dieses Kreislaufs und der Mischkammer angeordnet sind, der zweite Kreislauf zur Injektion und/oder zum Abziehen (6) eine oder mehrere Öffnungen O₂ umfasst, die auf der gemeinsamen Wand des zweiten Kreislaufs und an der Mischkammer angeordnet sind, wobei die Orientierung der Achsen der Öffnungen (O₁, O₂) so gewählt ist, dass das Fluid, das entlang dieser Öffnungen passiert, wenigstens einen gefüllten Bereich der Wand der Mischkammer erreicht.

11. Vorrichtung nach Anspruch 10, **dadurch gekennzeichnet, dass** die Achse der auf der ersten angeordneten Öffnungen (bzgl. der zweiten gemeinsamen Wand) zu einem gefüllten Teil der zweiten gemeinsamen Wand der Mischkammer (bezüglich der ersten gemeinsamen Wand) ausgerichtet ist.

12. Vorrichtung nach einem der vorhergehenden Ansprüche, **dadurch gekennzeichnet, dass** die Kammer zum Mischen und/oder zum Abziehen einer zwischen zwei gegenüberliegenden Wänden genommene Breite hat, die zwischen 10 und 100 mm und vorzugsweise zwischen 20 und 60 mm und noch bevorzugter zwischen 30 und 50 mm liegt.

13. Vorrichtung nach einem der vorhergehenden Ansprüche, **dadurch gekennzeichnet, dass** die Mittel zum Sammeln und zur Verteilung jeweils einen Sammelraum und einen Verteilerraum umfassen, und dadurch, dass wenigstens eine Strahlreglervorrichtung auf dem Niveau wenigstens einer dieser Räume angeordnet ist.

14. Vorrichtung nach einem der vorhergehenden Ansprüche, **dadurch gekennzeichnet, dass** sie wenigstens vier Kreisläufe zur Injektion und/oder zum Abziehen umfasst, welche in Bezug zu der Kammer zum Mischen und/oder zum Abziehen derart angeordnet sind, dass wenigstens eine gemeinsame Wand und Öffnungen zur Kommunikation mit der Kammer vorliegen, wobei die Achsen dieser Öffnungen auf der gemeinsamen Wand so ausgerichtet sind, dass das Fluid auf einen gefüllten Teil einer anderen Wand der Kammer zum Mischen und/oder zum Abziehen aufschlagen wird, wobei die andere Wand eine nicht mit der Kammer zum Mischen und/oder Abziehen gemeinsame Wand ist.

15. Vorrichtung nach einem der vorhergehenden Ansprüche, **dadurch gekennzeichnet, dass** die Kammer zum Mischen und/oder zum Abziehen Turbulenzunterstützungsmittel umfasst, welche innerhalb angeordnet sind.

16. Vorrichtung nach einem der vorhergehenden Ansprüche, **dadurch gekennzeichnet, dass** sie eine rechteckige Form mit einer Breite hat, die von 600 mm bis 1200 mm variiert.

17. Kolonne, die die Trennung eines Körpers ausgehend von einem Fluid, das wenigstens mehrere trennbare Bestandteile umfasst, ermöglicht und die wenigstens ein erstes und ein zweites Bett fester Granulate umfasst, die durch wenigstens eine DME-Vorrichtung getrennt sind, wobei die DME wenigstens Mittel zum Sammeln (3, 4) der zu trennenden Körper umfasst, wobei die Mittel zum Sammeln in Beziehung mit wenigstens einer Kammer zum Mischen (7), wenigstens einem ersten Kreislauf (12, 5) zur Injektion und/oder zum Abziehen eines ersten sekundären Fluids B₁ und wenigstens einem zweiten Kreislauf (13, 6) zur Injektion und/oder zum Abziehen eines zweiten sekundären Fluids B₂ stehen, wobei die Kreisläufe zur Injektion und/oder zum Abziehen in Kommunikation mit der Mischkammer (7) mit Hilfe von einer oder mehreren Öffnungen (15, 16) stehen, die den Durchgang der sekundären Fluide B₁, B₂ in der Mischkammer ermöglichen, wobei die Mischkammer (7) wenigstens eine Einführungsöffnung (14) und eine Austrittsöffnung (17), Mittel zur Verteilung (8, 9) des Fluids aus der Mischkammer umfasst, **dadurch gekennzeichnet, dass** die Mittel zur Injektion und/oder zum Abziehen verschieden und in der Nähe der Mischkammer angeordnet und durch eine der Wände der Kammer getrennt sind, wobei die Wand eben ist und eine im wesentlichen zur Achse der DME parallele Richtung hat.

18. Kolonne nach Anspruch 17, **dadurch gekennzeichnet, dass** sie wenigstens eine DME umfasst, welche wenigstens vier unabhängige Kreisläufe zur Injektion und/oder zum Abziehen, durch wenigstens eine der Wände der Mischkammer getrennt umfasst, wobei die Wand der Kammer eine im wesentlichen zur Achse der Kolonne parallele Richtung hat.

19. Kolonne nach Anspruch 18, **dadurch gekennzeichnet, dass** die Mischkammer einer DME wenigstens ein Mittel wie ein Baffle umfasst, das mit wenigstens einer Öffnung versehen ist, die das Fluid passieren lässt, um die Mischkammer in mehrere Unterkammern zum Mischen zu unterteilen.

20. Kolonne nach einem der Ansprüche 17 bis 19, **dadurch gekennzeichnet, dass** die Mittel zum Sammeln und/oder die Mittel zur Verteilung eine zu Minimieren der Umlaufzeitunterschiede der verschiedenen Fluidleitungen ausgelegte Form haben, welche wenigstens einen Teil des Bettes fester Granulate vor deren Eintritt in die Mischkammer durchquert haben, und/oder um die Umlaufzeiten der Fluidleitungen aus der Mischkammer bis zu deren Eintritt in das zweite, hinter der DME angeordnete Bett zu homogenisieren.

21. Kolonne nach einem der Ansprüche 17 bis 20, **dadurch gekennzeichnet, dass** sie mehrere DME gemäß einem der Ansprüche 1 bis 16 nebeneinander angeordnet und gemäß einem oder mehrerer Abschnitte der Kolonne verteilt umfasst.

22. Kolonne nach einem der Ansprüche 17 und 18, **dadurch gekennzeichnet, dass** sie mehrere DME und Dichtungsmittel zwischen den DME und den DME und der äußeren Kolonnenwand umfasst, damit das Fluid vorzugsweise im wesentlichen durch die Mischkammer der DME läuft.

23. Kolonne nach einem der Ansprüche 21 und 22, **dadurch gekennzeichnet, dass** sie wenigstens eine Hauptleitung zur Fluidverteilung von außerhalb der Kolonne zu wenigstens einer Kammer zur Injektion und/oder zum Abziehen umfasst, die für einem Fluid gewidmet ist, wobei die Hauptleitung mit wenigstens einer der Kammern zur Injektion und/oder zum Abziehen mittels einer Verzweigung verbunden ist, wobei die Hauptleitung die äußere Wand der Kolonne durchquert.

24. Kolonne zum Trennen wenigstens eines Körpers ausgehend von einem Fluid, welches wenigstens mehrere trennbare Verbindungen umfasst, **dadurch gekennzeichnet, dass** sie in Kombination umfasst:
- wenigstens ein Mittel zur "Unterstützung" (Pc), das im wesentlichen entlang der Longitudinalachse der Kolonne angeordnet ist,
- einen oder mehrere Hauptträger (P), wobei der oder die Hauptträger mit wenigstens einem Unterstützungsmittel (Pc) verbunden sind,
- mehrere DME-Vorrichtungen gemäß einem der Ansprüche 1 bis 16, wobei die DME für einen gleichen Abschnitt um die Unterstützungsmittel herum und über dem oder den Hauptträgern angeordnet sind, wobei die DME voneinander durch Dichtungsmittel getrennt sind, wobei die DME zwischen einem ersten und einem zweiten Bett fester Granulate angeordnet sind und die Hauptträger in dem zweiten Bett fester Granulate getränkt sind,
- wenigstens ein Hauptmittel zur Verteilung und/oder zum Abziehen eines Fluids zu einem Kreislauf zur Injektion und/oder zum Abziehen.

25. Verwendung einer Kolonne nach einem der Ansprüche 17 bis 24, um die chromatographische Trennung eines Körpers durchzuführen.
